(19) Europäisches Patentamt
European Patent Office
Office européen des brevets

(11) EP 1 795 002 B1

(12) EUROPEAN PATENT SPECIFICATION

(45) Date of publication and mention of the grant of the patent:
**16.10.2013 Bulletin 2013/42**

(21) Application number: **05803394.5**

(22) Date of filing: **07.11.2005**

(51) Int Cl.:
***H04N 1/46*** *(2006.01)* ***G06T 5/00*** *(2006.01)*
***B41J 2/525*** *(2006.01)* ***H04N 1/60*** *(2006.01)*
***G06T 1/00*** *(2006.01)*

(86) International application number:
**PCT/JP2005/020761**

(87) International publication number:
**WO 2006/051921 (18.05.2006 Gazette 2006/20)**

(54) **IMAGE PROCESSING METHOD, PRINTER DRIVER, IMAGING APPARATUS, IMAGE PROCESSING APPARATUS, AND IMAGING SYSTEM**

BILDVERARBEITUNGSVERFAHREN, DRUCKERTREIBER, BILDGEBUNGSVORRICHTUNG, BILDVERARBEITUNGSVORRICHTUNG UND BILDGEBUNGSSYSTEM

PROCEDES DE TRAITEMENT D’IMAGES, PILOTE D’IMPRIMANTE, DISPOSITIF D’IMPRESSION D’IMAGES, DISPOSITIF DE TRAITEMENT D’IMAGES, ET SYSTEME D’IMPRESSION D’IMAGES

(84) Designated Contracting States:
**DE ES FR GB IT NL**

(30) Priority: **11.11.2004 JP 2004327176**

(43) Date of publication of application:
**13.06.2007 Bulletin 2007/24**

(73) Proprietor: **Ricoh Company, Ltd.**
**Tokyo 143-8555 (JP)**

(72) Inventors:
- **SAKAKIBARA, Shigetaka**
  **Kanagawa 243-0012 (JP)**
- **YOSHIDA, Masakazu**
  **Kanagawa 241-0815 (JP)**
- **HIRANO, Masanori**
  **Kanagawa 243-0203 (JP)**

(74) Representative: **Leeming, John Gerard**
**J A Kemp**
**14 South Square**
**Gray’s Inn**
**London WC1R 5JJ (GB)**

(56) References cited:
**EP-A- 1 087 613**
**JP-A- 4 204 567**
**JP-A- 9 214 789**
**JP-A- 2002 327 138**
**US-A- 5 162 860**
**US-A1- 2004 109 178**
**US-B1- 6 765 693**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 795 002 B1

## Description

### TECHNICAL FIELD

The present invention relates to an image processing method, a printer driver, an imaging apparatus, an image processing apparatus, and an imaging system.

### BACKGROUND ART

An inkjet recording apparatus including a liquid droplet discharging head as a recording head, for example, may be applied to an imaging apparatus such as a printer, a facsimile machine, a copier, or a multi-function imaging apparatus configured to perform more than one of the above imaging functions, for example. The inkjet recording apparatus is configured to perform a recording process by discharging a recording liquid such as ink from an ink recording head onto a recording medium such as paper, OHP, and any other type of medium on which ink or some other type of recording liquid may adhere. The inkjet recording apparatus is capable of recording a fine color image at high speed.

Such an inkjet recording apparatus is becoming increasingly popular for personal use owing to its moderate price and its ability to record high-quality images upon using special paper for inkjet recording. The inkjet recording apparatus has other advantages such as low noise and low running cost. In turn, for example, color printers using the inkjet recording apparatus capable of printing images not only on special paper for inkjet printing but on normal paper are being introduced into the market.

However, it is quite difficult to adequately satisfy all conditions pertaining to characteristics such as color reproducibility of the recorded image, durability, light resistance, drying characteristics of the recorded image, feathering, color bleeding, dual printability, discharge and stability, for example. Therefore, the ink (recording liquid) to be used is selected based on the characteristics being prioritized according to usage of the inkjet recording apparatus. It is noted that it has been particularly difficult to adequately satisfy the above conditions in an inkjet recording apparatus that is configured to perform highspeed recording on normal paper.

Generally, ink used in inkjet recording includes water as its main component in addition to coloring and a wetting agent such as glycerin for preventing clogging. Dye is widely used as the coloring, owing to its good color development characteristics and stability. However, an image produced using dye- based ink lacks durability and water resistance. With regard to water resistance, certain improvements are being made by modifying the special paper for inkjet printing that includes an ink absorbing layer; however, adequate water resistance characteristics cannot be achieved for an image printed on normal paper.

In recent years and continuing, pigment ink using pigment such as organic pigment and carbon black as the coloring instead of dye is being developed in order to resolve one or more of the problems described above. Since pigment does not dissolve in water, the pigment is combined with a dispersing agent and processed to be stably dispersed in water so that the pigment ink may be used as an aqueous ink. By using ink containing pigment as the coloring, water resistance and durability of an image formed on normal paper or special paper may be improved compared to the case of using dye-based ink.

However, when black pigment ink is printed on a glossy recording medium including a special inkjet printing paper such as glossy paper, semi- glossy paper, and matte paper, glossiness may be lost in the printed image since the black pigment ink includes carbon black as its component.

In turn, according to the disclosure of Japanese Laid-Open Patent Publication No. 2002-327138, two types of black ink are provided so that black ink including pigment may be used when printing on normal paper, and black ink including dye that is capable of maintaining glossiness may be used rather than the black pigment ink when printing on special paper such as glossy paper, semi-glossy paper, or matte paper, for example.

Also, according to the disclosures of Japanese Laid- Open Patent Publication No. 2004- 82709 and Japanese Laid- Open Patent Publication No. 2000- 225719, a composite black ink made up of the three colors cyan, magenta, and yellow is used rather than black ink for realizing black on special paper such as glossy paper, semi- glossy paper, or matte paper, for example.

However, in the case of providing two types of black ink for printing on different types of paper, as is proposed in the first disclosure, the number of ink tanks and heads have to be increased, and a subsystem for maintaining and restoring the heads has to be enlarged as well so that costs may increase.

In the case of using the composite black ink made up of cyan, magenta, and yellow rather than using black ink for printing on special paper such as glossy paper, semi-glossy paper, or matte paper as is disclosed in the latter disclosures, since black is realized without using black ink, color may be easily transferred to non-color regions. Also, since the tone of the black color is represented by mixing three colors, when the tone is incremented by one level, the additional amount of ink to be used may be three times the amount to be used in the case of representing the black color with a solid black color ink, and thereby, the differences in tone may stand out especially in highlighted portions in which small amounts of ink are used.

US- B1- 6, 765, 693 discloses that black ink is used to regulate the grayscale up to a certain level. Above a certain level the amount of black ink remains constant and the CMY components regulate the amount of grayscale.

US- A- 5, 162, 860 discloses a color image forming apparatus which uses a UCR process in which the rate of black color generation is adjusted to regulate the glossiness of the printed image.

The present invention has been conceived in response to one or more of the problems described above, and it provides an image processing method as defined in claim 1. It also provides a printer driver configured to perform that method and a corresponding inkjet recording apparatus and image processing apparatus.

In a preferred embodiment of the present invention, the recording liquids contain pigment. In another preferred embodiment, the maximum black recording liquid incorporation amount is regulated such that the glossiness of the black realized in the image formed on the glossy recording medium does not become substantially lower than glossiness of the glossy recording medium.

In one preferred embodiment of the present invention, an under color removal amount for the under color removal process is set to 100%. In an alternative embodiment, the under color removal amount for the under color removal process is set to 100% until the under color removal amount reaches the regulated maximum black recording liquid incorporation amount.

The invention will be further described by way of example with reference to the accompanying drawings, in which:-

FIG. 1 is a diagram showing an overall mechanical configuration of an inkjet recording apparatus as an imaging apparatus according to an embodiment of the present invention;
FIG. 2 is a plan view of a portion of the recording apparatus;
FIG. 3 is a perspective view of a head unit of the recording apparatus;
FIG. 4 is a diagram showing an exemplary configuration of a carrier belt of the recording apparatus;
FIGS. 5A and 5B are diagrams illustrating an image forming operation that is performed by the recording apparatus;
FIG. 6 is a block diagram showing a configuration of a control unit of the recording apparatus;
FIG. 7 is a block diagram illustrating an exemplary functional configuration of a printer driver implemented in an image processing apparatus according to an embodiment of the present invention;
FIG. 8 is a block diagram illustrating another exemplary functional configuration of the printer driver;
FIG. 9 is a flowchart illustrating a sequence of image processes executed within the printer driver;
FIG. 10 is a graph illustrating a BG/UCR process of the image processes of FIG. 9;
FIG. 11 is a graph illustrating grayscale characteristics realized in a case where black is obtained using solid color black and in a case where black is obtained using composite black;
FIG. 12 is a graph comparing gray balances in a case where black is obtained through image processes according to an embodiment of the present invention and in a case where composite black is used;
FIG. 13 is a graph illustrating glossiness characteristics realized for different black ink incorporation amounts;
FIG. 14 is a graph indicating sensory evaluation results for different black ink incorporation amounts; and
FIG. 15 is a table indicating different black ink incorporation amounts and their corresponding glossiness differences with respect to the recording paper used.

## BEST MODE FOR CARRYING OUT THE INVENTION

In the following, preferred embodiments of the present invention are described with reference to the accompanying drawings.

First, an exemplary inkjet recording apparatus as an imaging apparatus according to an embodiment of the present invention is described with reference to FIGS. 1 through 4. It is noted that FIG. 1 is a diagram showing an overall configuration of the inkjet recording apparatus, FIG. 2 is a plan view of the inkjet recording apparatus showing relevant components thereof, FIG. 3 is a perspective view showing a configuration of a recording head of the inkjet recording apparatus, and FIG. 4 is a cross- sectional view of a carrier belt of the inkjet recording apparatus.

The inkjet recording apparatus according to the present embodiment includes an apparatus main body 1, an imaging unit 2 that is arranged inside the apparatus main body 1, a paper feed tray 4 arranged at a lower side of the apparatus main body 1 and configured to hold plural recording media 3 (referred to as 'sheet 3' hereinafter) that are stacked thereon, a carrier mechanism 5 that introduces the sheet 3 supplied from the paper feed tray 4 and carries the sheet 3 while the imaging unit 2 records an image thereon, and a paper discharge tray 6 attached to a side of the apparatus main body 1 to which the sheet 3 is discharged.

Also, the present inkjet recording apparatus includes a dual- side printing unit 7. In the case of performing dual- side printing, after printing is completed on one side (front side) of the sheet 3, the sheet 3 is carried in a backward direction by the carrier mechanism 5, and is introduced inside the dual- side printing unit 7 to be turned over so that the sheet 3 may be delivered once more to the carrier mechanism 5 with its other side (back side) as the printable surface. In this way, printing is performed on the other side of the sheet 3, after which the sheet 3 is discharged to the paper discharge tray 6.

The imaging unit 2 includes a carriage 13 that is slidably held by guide shafts 11 and 12. The carriage 13 is moved in a direction perpendicular to the carrying direction of the sheet 3 (main scanning direction) by a main scanning motor (not shown). A recording head 14 including one or more liquid discharge heads having plural nozzle holes 14n as discharge outlets for discharging liquid droplets (see FIG.3) is mounted on the carriage 13. Also, an ink cartridge 15 for supplying liquid to the recording head 14 is detachably mounted on the carriage 13. It is noted that in an alternative embodiment, a sub tank may be mounted on the carriage 13 instead of the ink cartridge 15, and in such a case, ink may be supplied from a main tank to the sub tank.

According to an embodiment as is illustrated in FIGS.2 and 3, the recording head 14 may include four independent inkjet heads 14y, 14m, 14c, and 14k as liquid droplet discharge heads for discharging ink droplets of the colors yellow (Y), magenta (M), cyan (C), and black (Bk), respectively. However, the present invention is not limited to such an embodiment, and for example, the recording head 14 may also be realized by one or more liquid discharge heads having plural nozzle arrays for discharging different colors. Also, it is noted that the number of colors and their arrangement order are not limited to the illustrated embodiment.

The inkjet head making up the recording head 14 may include energy generating means for discharging ink in the form of a piezoelectric actuator such as a piezoelectric element, a thermal actuator that uses an electrothermal conversion element such as a heating resistive element and relies on a phase change induced by film boiling of liquid, a shape-memory alloy actuator using a metal phase change induced by temperature change, or an electrostatic actuator using electrostatic force, for example.

The sheets 3 stacked on the paper feed tray 4 are fed into the apparatus main body 1 and delivered to the carrier mechanism 5 one at a time by separating each sheet 3 from another sheet 3 by means of a paper feed roller (meniscus roller) and a separation pad (not shown).

The carrier mechanism 5 includes a carrier guide unit 23 having guide surfaces 23a and 23b that guides the sheet 3 fed from the paper feed tray 4 in an upper direction along the guide surface 23a, and guides the sheet 3 delivered from the dual-side printing unit 7 along a guide surface 23b. The carrier mechanism 5 also includes a carrier roller 24 that carries the sheet 3, a pressure roller 25 that presses the sheet 3 onto the carrier roller 24, a guide member 26 that guides the sheet 3 toward the carrier roller 24, a guide member 27 that guides the sheet 3 being returned for dual-side printing to the dual-side printing unit 7, and a pressing roller 28 for pressing the sheet 3 being discharged from the carrier roller 24.

Also, in order to enable the carrier mechanism 5 to maintain the planarity of the sheet 3 while carrying the sheet 3 across the recording head 14, the carrier mechanism 5 may further include a drive roller 31, a driven roller 32, a carrier belt 33 that is arranged around the drive roller 31 and the driven roller 32, a charge roller 34 for charging the carrier belt 33, a guide roller 35 arranged opposite the charge roller 34, a guide member (not shown) such as a platen plate that guides the portion of the carrier belt 33 opposing the imaging unit 2, and a cleaning roller (not shown) made of a porous material corresponding to cleaning means for removing recording liquid (ink) stuck to the carrier belt 33, for example.

According to the present embodiment, the carrier belt 33 corresponds to an endless belt that is arranged around the drive roller 31 and the driven roller 32 (tension roller) and is configured to move in the direction of the arrow shown in FIG.1 (sheet carrying direction).

The carrier belt 33 may have a one-layer structure, a two-layer structure with a first layer (surface layer) 33a and a second layer (bottom layer) 33b as is shown in FIG.4, or a three-layer structure, for example. In one specific example, the carrier belt 33 may have a surface layer corresponding to a sheet attracting surface that is made of pure resin material such as pure ETFE material with a thickness of approximately 40 $\mu$m on which rheostatic control is not performed, and a bottom layer made of the same material as the top layer on which rheostatic control is performed using carbon as a resistance layer and/or an earth layer.

According to the present embodiment, the charge roller 34 is arranged to come into contact with the surface layer of the carrier belt 33 and be driven and rotated by the turning motion of the carrier belt 33. Also, it is noted that a high voltage from a high voltage circuit or a high voltage power source (not shown) is applied to the charge roller 34 according to a predetermined pattern.

Also, in the present embodiment, a discharge roller 38 is arranged at the downstream side of the carrier mechanism 5 to discharge the sheet 3 having one or more images recorded thereon to the paper discharge tray 6 (see FIG. 1) .

In the imaging apparatus having the above-described configuration, the carrier belt 33 moves around in the direction of the arrow indicated in FIG.1 and comes into contact with the charge roller 34 that has applied a voltage with high potential so that the carrier belt 33 may be positively charged. In such a case, the polarity of the charge of the charge roller 34 may be switched at predetermined time intervals so that the carrier belt 33 may be charged with a predetermined electrostatic pitch.

When the sheet 3 is supplied to the carrier belt 33 that is charged with such a high potential, a polarization state may be created within the sheet 3, and a charge with a polarity that is opposite the polarity of the charge of the carrier belt 33 is induced at the surface of the sheet 3 that is in contact with the carrier belt 33. In this way, the charge on the carrier belt 33 and the charge induced at the surface of the sheet 3 being carried may be statically attracted to each other so that the sheet 3 may be statically adhered to the carrier belt 33. By arranging the sheet 3 to be adhered to the carrier belt 33, unevenness such as curves and warps in the sheet 3 may be corrected, and a smooth surface may be created.

Then, the carrier belt 33 is moved so that the sheet 3 may be moved. The carriage 13 may perform one- way scanning or bidirectional scanning while driving the recording head 14 according to an image signal to induce liquid droplets 14i to be discharged (sprayed) from the recording head 14. The liquid droplets 14i in the form of ink droplets, for example, are arranged to land on the sheet 3 that is maintained still so that dots Di may be formed thereon as is illustrated in FIGS. 5A and 5B. In this way, one line may be recorded on the sheet 3, after which the sheet 3 may be moved a predetermined pitch to record the next line. When a recording end signal or a signal indicating that the bottom end of the sheet 3 has been reached is received, the recording operation is ended. It is noted that FIG. 5B is an enlarged view illustrating the formation process of the dot Di shown in FIG. 5A.

The sheet 3 having one or more images recorded thereon in the above-described manner may be discharged to the paper discharge tray 6 by the discharge roller 38.

In the following, the ink used as the recording liquid for the present inkjet recording apparatus is described.

In the present embodiment, the pigment included as the coloring material of the ink used in the present inkjet recording apparatus is not limited to a particular type. Listed below are some preferred examples of pigments that may be used. It is noted that plural types of pigments may be combined as well.

As organic pigments, azo-based pigments, phthalocyanine-based pigments, anthraquinone-based pigments, quinacridone-based pigments, dioxazine-based pigments, indigo-based pigments, thioindigo-based pigments, perylene-based pigments, isoindolinone-based pigments, aniline black, azomethine-based pigments, rhodamine lake B pigments, and/or carbon black may be used, for example.

As inorganic pigments, iron oxide, titanium oxide, carbon calcium, barium sulfate, aluminum hydroxide, barium yellow, Prussian blue, cadmium red, chrome yellow, and/or metal powder may be used, for example.

It is noted that the particle diameter of the one or more pigments used in the ink are preferably arranged to be within a range of 0.01-0.30 μm. When the particle diameter is less than 0.01 μm, the particle diameter may be close to that of dye particles so that characteristics pertaining to water resistance and feathering may be not be adequately achieved. When the particle diameter is greater than 0.30 μm, clogging may occur at the discharge outlets and/or the filter provided within the printer, for example, and adequate discharge stability may not be achieved.

Also, it is noted that furnace black or channel black are preferably used as the carbon black contained in black pigment ink. The carbon black preferably has a primary particle diameter within a range of 15- 40 μm, a BET specific surface area within a range of 50- 300 $m^2$/g, a DBP oil absorption number within a range of 40- 150 ml/ 100 g, a volatile content within a range of 0.5- 10%, and a pH value of 2- 9. Examples of carbon black satisfying such conditions may include but are not limited to No. 2300, No. 900, MCF- 88, No. 33, No. 40, No. 45, No. 52, MA7, MA8, MA100, and No. 2200B (by Mitsubishi Chemical Corporation) ; Raven 700, Raven 5750, Raven 5250, Raven 5000, Raven 3500, and Raven 1255 (by Columbia Chemicals Co.) ; Regal 1400, Regal 330R, Regal 660R, MogulL, Monarch 700, Monarch 800, Monarch 880, Monarch 900, Monarch 1000, Monarch 1100, Monarch 1300, and Monarch 1400 (by Cabot Corporation) ; and Color Black FW1, Color Black FW2, Color Black FW2V, Color Black FW18, Color Black FW200, Color Black S150, Color Black S160, Color Black S170, Print Text 35, Print Text U, Print Text V, Print Text 140U, Print Text140V, Special Black 6, Special Black 5, Special Black 4A, and Special Black 4 (by Degussa) .

In the following, specific examples of color pigments are given.

As organic pigments, azo-based pigments, phthalocyanine-based pigments, anthraquinone-based pigments, quinacridone-based pigments, dioxazine-based pigments, indigo-based pigments, thioindigo-based pigments, perylene-based pigments, isoindolinone-based pigments, aniline black, azomethine-based pigments, rhodamine lake B pigments, and/or carbon black may be used, for example. As inorganic pigments, iron oxide, titanium oxide, carbon calcium, barium sulfate, aluminum hydroxide, barium yellow, Prussian blue, cadmium red, chrome yellow, and/or metal powder may be used, for example.

More specifically, the following pigments may be used for each of the different colors of ink.

Examples of pigments that may be used as yellow ink include but are not limited to C. I. pigment yellow 1, C. I. pigment yellow 2, C. I. pigment yellow 3, C. I. pigment yellow 12, C. I. pigment yellow 13, C. I. pigment yellow 14, C. I. pigment yellow 16, C. I. pigment yellow 17, C. I. pigment yellow 73, C. I. pigment yellow 74, C. I. pigment yellow 75, C. I. pigment yellow 83, C. I. pigment yellow 93, C. I. pigment yellow 95, C. I. pigment yellow 97, C. I. pigment yellow 98, C. I. pigment yellow 114, C. I. pigment yellow 128, C. I. pigment yellow 129, C. I. pigment yellow 151, and C. I. pigment yellow 154.

Examples of pigments that may be used as magenta ink include but are not limited to C. I. pigment red 5, C. I. pigment red 7, C. I. pigment red 12, C. I. pigment red 48 (Ca), C. I. pigment red 48 (Mn), C. I. pigment red 57 (Ca), C. I. pigment red 57:1, C. I. pigment red 112, C. I. pigment red 123, C. I. pigment red 168, C. I. pigment red 184, and C. I. pigment red 202.

Examples of pigments that may be used as cyan ink include but are not limited to C. I. pigment blue 1, C. I. pigment blue 2, C. I. pigment blue 3, C. I. pigment blue 15:3, C. I. pigment blue 15:34, C. I. pigment blue 16, C. I. pigment blue 22, C. I. pigment blue 60, C. I. Bat blue 4, and C. I. Bat blue 60.

Also, it is noted that pigment specifically manufactured for application to the present embodiment may be used well.

Recording liquid for inkjet printing may be manufactured by dispersing the above pigments in an aqueous medium using a high polymer dispersing agent or a surface active agent. For example, a water-soluble surface active agent (water-soluble resin) may be used to disperse organic pigment powder in the aqueous medium.

Specific examples of water-soluble resin include a block copolymer, a random copolymer, or a base made from at least two monomeric substances selected from styrene, styrene derivatives, vinylnaphthalene derivatives, aliphatic alcoholic ester of ", "-ethylenic unsaturated carboxylic acid, acrylic acid, acrylic acid derivatives, maleic acid, maleic acid derivatives, itaconic acid, itaconic acid derivatives, fumaric acid, and fumaric acid derivatives, for example.

According to an embodiment, the water-soluble resin corresponds to alkali-soluble resin that is soluble in an aqueous base solution, the water-soluble resin preferably having a weight-average molecular weight within a range of 3000-20000. By using such a water-soluble resin in the inkjet recording liquid, the viscosity of the dispersion solution may be decreased, and dispersion may be facilitated.

In another example, a combination of a high polymer dispersing agent and a self-dispersing pigment may be used to realize a desirable dot diameter. The reasons such effects may be obtained are not exactly known, but the following presumptions may be made.

By including a high polymer dispersing agent in the inkjet recording solution, penetration of the recording solution into the recording sheet may be suitably controlled. Also, by including the high polymer dispersing agent, agglomeration of the self-dispersing agent may be controlled so that the self-dispersing agent may spread smoothly in lateral directions. It is believed that in this way, the recording liquid may be widely and thinly spread to realize a desirable dot configuration.

It is noted that specific examples of a water-soluble surface active agent includes anionic surface active agents such as high grade fatty acid salts, alkyl sulfate salts, alkyl ether sulfate salts, alkyl ester sulfate salts, alkyl aryl ether sulfate salts, alkyl sulfonic acid salts, sulfosuccinic acid salts, alkyl aryl and alkyl naphthalene sulfonic acid salts, alkyl phosphate salts, polyoxyethylene alkyl ether phosphate ester salts, and alkyl aryl ether phosphate salts; and cationic surface active agents such as alkyl amine salts, dialkylamine salts, tetralkyl ammonium salts, benzalkonium salts, alkyl pyridinium salt, and imidazolinium salt.

Further amphoteric surface active agents may be used such as dimethyl alkyl lauryl betaine, alkyl glycine, alkyldi(aminoethyl)glycine salt, and imidazolinium betaine. Also nonionic surface active agents may be used such as polyoxyethylene alkyl ether, polyoxyethylene alkyl aryl ether, polyoxyethylene polyoxypropylene glycol, glycerin ester, sorbitan ester, sucrose ester, polyoxyethylene ether of glycerin ester, polyoxyethylene ether of sorbitan ester, polyoxyethylene ether of sorbitol ester, fatty acid alkanol amides, polyoxyethylene fatty acid amides, amine oxides, and polyoxyethylene alkyl amines.

According to one embodiment, the pigment may be encapsulated by resin having a hydrophilic base so that good dispersion characteristics may be realized.

It is noted that any process may be used for encapsulating non-water-soluble pigment by organic high polymers to form microcapsules. Such processes include chemical processes, physical processes, physiochemical processes, and mechanical processes. More specifically, interfacial polymerization, in-situ polymerization, in-liquid curing (orifice process), coacervation (phase separation), in-liquid drying, melting/dispersing/cooling, air-suspension coating (spouted bed coating), spray drying, acid catalyzing, and the phase inversion emulsion may be used, for example.

The interfacial polymerization process involves separately dissolving two monomers or two reactants into a dispersed phase and a continuous phase, and inducing reaction of the materials at their interfaces to form a wall. The in-situ polymerization process involves supplying a liquid or gas monomer and a catalyst, or two types of reactive materials from one of continuous phase nuclear particle sides to induce reaction and form a wall. The in-liquid curing process involves encapsulating high polymer solution droplets including core material particles with a curing agent in liquid to form a wall.

The coacervation (phase separation) process involves separating high polymer dispersion liquid including core material particles into a coacervate (high concentration phase) with a high level of high polymer concentration and a dilute phase to form a wall. The in-liquid drying process involves preparing the liquid including the core material dispersed in the solution of the wall material, introducing the dispersion liquid into a liquid that does not mix with the continuous phase of the dispersion liquid to produce a composite emulsion, and gradually removing the medium into which the wall material is dissolved to form a wall.

The melting/dispersing/cooling process involves using a wall material that melts when heated but solidifies at normal temperatures, heating and liquefying this wall material, dispersing core material particles in the wall material, and cooling the dispersion liquid into fine particles to form the wall. The air-suspension coating process involves suspending core material particles in powder form in air by a fluidized bed, and maintaining the particles in an air-borne state while spray mixing a coating liquid of the wall material to form the wall.

The spray drying process involves spraying the encapsulating concentrate solution so that it comes into contact with hot air, and vaporizing the volatile content matter thereof to form the wall. The acid catalyzing process involves neutralizing at least a portion of an anionic base included in an organic high polymer compound material to provide the material with solubility with respect to water, mixing the material together with coloring in an aqueous medium, neutralizing or acidifying the material in an acidic compound, separating the organic compound material and fixing it to the coloring, and neutralizing and dispersing the material. The phase inversion emulsion process involves using a mixture including coloring material and an anionic organic high polymer material having dispersion power with respect to water as an organic solvent phase, and charging water into the organic solvent phase or charging the organic solvent phase into water.

It is noted that specific examples of organic high polymer material (resin) as an ingredient of the wall material of the microcapsule may include polyamide, polyurethane, polyester, polyurea, epoxy resin, polycarbonate, urea resin, melamine resin, phenol resin, complex carbohydrate, gelatin, gum acacia, dextran, casein, protein, natural rubber, carboxypolymethylene, polyvinyl alcohol, polyvinyl pyrrolidone, polyvinyl acetate, polychlorinated vinyl, polychlorinated vinyliden, cellulose, ethyl cellulose, methyl cellulose, nitro cellulose, hydroxyl ethyl cellulose, acetylcellulose, polyethylene, polystyrene, polymer or copolymer of (meta) acrylic acid, polymer or copolymer of ester (meta) acrylate, (meta) acrylic acid- ester (meta) acrylate copolymer, styrene- (meta) acryl acid copolymer, styrene- maleic acid copolymer, alginic acid soda, fatty acid, paraffin, yellow beeswax, water wax, cured beef tallow, carnauba wax, and albumin, for example.

Of the above-described materials, organic high polymers including an anionic base such as a carboxylic acid base or a sulfonic acid base may be used according to one embodiment. Also, specific examples of nonionic organic high polymer include polyvinyl alcohol, polyethylene glycol monomethacrylate, polypropylene glycol monomethacrylate, methoxy polyethylene glycol monomethacrylate, and (co)polymers thereof, and cation ring opening polymer of 2-oxazoline, for example. It is particularly noted that polyvinyl alcohol, which may be obtained through complete saponification, is preferably used since it has low water-solubility and is characterized in that it is easily dissolved in heated water but not easily dissolved in cool water.

It is noted that the amount of organic high polymer making up the wall material of the microcapsule is preferably set within a range of 1-20% by weight with respect to the non-water-soluble color material such as organic pigment or carbon black. By setting the amount of organic high polymer to the above range, the proportion of the organic high polymer within the capsule may be relatively low so that the degradation of color development characteristics of the pigment due to the coating of the surface of the pigment with the high polymer may be controlled. When the amount of the high polymer is below 1% by weight, the encapsulation effect may not be adequately obtained, and when the amount of the high polymer is above 20% by weight, the color development characteristics of the pigment may be significantly degraded. With consideration to other characteristics, the amount of the organic high polymer is more preferably set within a range of 5-10% by weight with respect to the amount of the non-water-soluble color material.

According to the present embodiment, a portion of the coloring material is not coated and is substantially exposed so that the degradation of the color development characteristics of the color material may be prevented. Also, a portion of the coloring material is not exposed and is substantially coated so that effects of encapsulating pigment may be obtained at the same time. It is also noted that the number average molecular weight of the organic high polymer is preferably arranged to be at least 2000 considering factors pertaining to capsule manufacturing, for example. In the above description, the expression 'substantially exposed' refers to a state in which a portion of the coloring material is intentionally exposed as opposed to partial exposure of the color material due to defects such as pinholes and cracks, for example.

As for the color material, self-dispersing organic pigment and self-dispersing carbon black may be used according to a preferred embodiment so that adequate pigment dispersing characteristics may be obtained and adequate preservation stability may be secured even when the proportion of the high polymer material within the capsule is relatively low.

It is noted that a suitable type of high polymer material is preferably selected according to the microencapsulation process being used. For example, when the interfacial polymerization process is used, polyester, polyamide, polyurethane, polyvinyl pyrrolidone, or epoxy resin may preferably be selected. When the in- situ polymerization process is used, polymer or copolymer of ester (meta) acrylate, (meta) acrylate- ester (meta) acrylate copolymer, styrene- (meta) acrylate copolymer, polychlorinated vinyl, polychlorinated vinyliden, or polyamide may preferably be selected. When the in- liquid curing process is used, soda alginate, polyvinyl alcohol, gelatin, albumin, or epoxy resin may preferably be selected. When the coacervation process is used, gelatin, cellulose, or casein may preferably be used. It is noted that other encapsulation processes may also be used to obtain fine and even microencapsulated pigment according to embodiments of the present invention.

When the phase inversion process or the acid catalyzing process is used, anionic organic high polymer material is preferably selected as the organic high polymer making up the wall material of the microcapsule. The phase inversion process involves using an organic solvent phase corresponding to a compound or complex material including an anionic organic high polymer material having dispersion power with respect to water and color material such as self-dispersing organic pigment or self-dispersing carbon black, or a mixture including coloring material such as self-dispersing organic pigment or self-dispersing carbon black, a curing agent, and an anionic organic high polymer material; and charging water into the organic solvent phase or charging the organic solvent phase into water to induce self-dispersion (phase inversion emulsion) and microencapsulation of the organic solvent. It is noted that in the phase inversion process, a vehicle or an additive of the recording liquid may be mixed into the organic solvent. In fact, according to an aspect, it may be more preferable to mix the liquid medium of the recording liquid in the organic solvent so that a dispersion liquid for the recording liquid may be directly manufactured.

The acid catalyzing process involves neutralizing a portion or all of an anionic base included in an organic high polymer compound material with a basic compound, mixing the material together with a color material such as self-dispersing organic pigment or self-dispersing carbon black in an aqueous medium, neutralizing or acidifying the pH of the material with an acidic compound, separating the organic compound material including the anionic base, fixing it to the coloring to obtain a hydrated cake, and neutralizing a portion or all of the anionic base with a basic compound to realize microencapsulation. In this way, an aqueous dispersion liquid containing fine anionic microcapsulated pigment having a large proportion of pigment material may be manufactured.

As for the solvent used in the microencapsulation processes described above, for example, alkyl alcohols such as methanol, ethanol, propanol, and butanol; aromatic carbon hydrides such as xylol; esters such as methyl acetate, ethyl acetate, and butyl acetate; chlorinated hydrocarbons such as chloroform and ethylene chloride; ketones such as acetone and methyl isobutyl ketone; ethers such as tetrahydrofuran and dioxane; and cellosolves such as methyl cellosolve and butyl cellosolve may be used. It is noted that the microcapsule prepared in the above-described manner is separated from the solvent through centrifugal separation or filtration, and then mixed with water and the suitable solvent to realize redispersion and thereby obtain a recording liquid that may be used in an embodiment of the present invention. Also, it is noted that the average particle diameter of the encapsulated pigment obtained in the above manner is preferably within a range of 50-180 nm.

By coating pigment with resin in the manner described above, the pigment may be stably attached to the printed object, and abrasion resistance characteristics of the printed object may be improved, for example.

In the following, an overall configuration of a control unit that may be included in the imaging apparatus according to the present embodiment is described with reference to FIG.6. FIG.6 is a block diagram showing an overall configuration of the control unit according to an embodiment.

The control unit 100 as is illustrated in FIG.6 includes a CPU 101 that administers overall control of the apparatus, a ROM 102 that stores programs that are executed by the CPU 101 and other fixed data, a RAM 103 that temporarily stores data such as image data, a nonvolatile memory (NRAM) 104 for preserving data even during the time the power of the apparatus is cut off, and an ASIC 105 for performing processes including various signal processes, image processes such as image rearrangement processes, and input/output signal processes for realizing overall control of the apparatus.

The control unit 100 also includes a host interface (I/F) 106 for realizing transmission/reception of data and signals with a host 90 such as a personal computer corresponding to an image processing apparatus according to an embodiment of the present invention, a head drive control unit 107 and a head driver 108 for driving and controlling the recording head 14, a main scanning motor drive unit 111 for driving the main scanning motor 110, a sub scanning motor drive unit 113 for driving the sub scanning motor 112, an environmental sensor 118 for detecting the environmental temperature and/or the environmental humidity, and an I/O 116 for inputting detection signals issued from various sensors (not shown).

Also, in the illustrated embodiment, the control unit 100 is connected to an operations panel 117 for inputting and displaying information for the apparatus. Further, the control unit 100 is configured to perform on/off switching control and output polarity switching control with respect to a high voltage circuit (AC bias supply unit) 114 that is configured to apply a high voltage to the charge roller 34.

According to an embodiment, the control unit 100 is configured to receive data such as print data including image data at the I/F 106 via a cable or a network from the host 9, which may correspond to a data processing apparatus such as a personal computer, an image reading apparatus such as an image scanner, or an image capturing apparatus such as a digital camera, for example. The generation and output of the print data directed to the control unit 100 may be executed by a print driver 91 provided at the host 90 side, for example.

According to an embodiment, the CPU 101 reads and analyzes print data that are stored in a reception buffer included in the I/F 106, performs a data rearrangement process at the ASIC 105, and transmits image data to the head drive control unit 107. In such a case, the conversion of print data into bitmap data for realizing image output may be executed by the print driver 91 of the host 90 as is described above, for example. Specifically, the image data (print data) are developed into bitmap data by the print driver 91 after which the bitmap data are transmitted to the imaging apparatus. However, other embodiments are possible such as that in which the ROM 102 of the control unit 100 stores font data and performs the bitmap data conversion, for example.

According to an embodiment, the head drive control unit 107 receives image data (dot pattern data) corresponding to one line image to be recorded by the recording head 14, synchronizes the dot pattern data of one line with a clock signal, transmits the signal as serial data to the head driver 108, and transmits a latch signal to the head driver 108 at a predetermined timing.

In a further embodiment, the head drive control unit 107 includes a ROM (which may be the ROM 102 described above) that stores pattern data of a drive waveform (drive signal), a waveform generating circuit including a D/A converter for performing D/A conversion on the drive waveform data read from the ROM, and a drive waveform issuing circuit including an amplifier, for example.

According to an embodiment, the head driver 108 includes a shift register that inputs serial data corresponding to the clock signal and the image data from the head drive control unit 107, a latch circuit that latches the registered value of the shift register with the latch signal from the head drive control unit 107, a level conversion circuit (level shifter) that changes the level of the output value of the latch circuit, and an analog switch array (switching unit) that is on/off controlled by the level shifter, for example. In this embodiment, by performing on/off control of the analog switch array, relevant drive waveforms included in the generated waveforms may be selectively applied to an actuator of the recording head 14 so as to drive the recording head 14.

In the following, exemplary configurations of an image processing apparatus (data processing apparatus) including a printer driver and corresponding to the host side that transmits image data for forming an image at the imaging apparatus according to embodiments of the present invention are described with reference to FIGS.7 and 8. It is noted that the imaging apparatus and the image processing apparatus according to embodiments of the present invention may make up an imaging system according to an embodiment of the present invention.

A printer driver 120 at the host side as is illustrated in FIG.7 includes a CMM (Color Management Module) processing part 131 that converts image data 130 that are represented by color space used for monitor display provided by application software, for example, into image data represented by color space suitably used in a recording apparatus (e.g., RGB color representation to CMY color representation); a BG/UCR (Black Generation/Under Color Removal) processing part 132 that performs black generation/under color removal processes on the converted CMY value; a gamma ($\gamma$) correction part 133 that includes a droplet application amount reduction processing part and is configured to perform input/output correction reflecting the characteristics of a relevant recording apparatus and/or the preferences of a relevant user; a zooming part 134 that performs a zooming process on the corrected image data according to the resolution of the relevant recording apparatus; and a halftone processing part 135 that includes a many-valued/small-valued matrix for replacing the zoom-processed image data with a pattern arrangement of dots to be sprayed from the relevant recording apparatus.

A printer driver 140 at the host side as is illustrated in FIG.8 includes the CMM (Color Management Module) processing part 131 that converts image data 130 that are represented by color space used for monitor display provided by application software; for example, into image data represented by color space suitably used in a recording apparatus (e.g., RGB color representation to CMY color representation); the BG/UCR (Black Generation/Under Color Removal) processing part 132 that performs black generation/under color removal processes on the converted CMY value; and the gamma ($\gamma$) correction part 133 that includes a droplet application amount reduction processing part and is configured to perform input/output correction reflecting the characteristics of a relevant recording apparatus and/or the preferences of a relevant user.

In the illustrated embodiment of FIG.8, the control unit 100 at the imaging apparatus side includes the zooming part 134 that performs a zooming process on the corrected image data according to the resolution of the relevant recording apparatus; and the halftone processing part 135 that includes a many-valued/small-valued matrix for substituting the zoom-processed image data with a pattern arrangement of dots to be sprayed from the relevant recording apparatus.

In the following, image processes executed by a printer driver at the host side according to an embodiment of the present invention are described with reference to FIG.9.

According to the present embodiment, when a 'print' command is issued through application software operating on a data processing apparatus such as a personal computer, the printer driver determines the types of objects included in an input 200 through an object determination process 201 to pass down data according to the determined object types. Specifically, image data of text 202, image data of one or more lines 203, image data of graphics 204, and image data of one or more images 205 are passed down through their corresponding routes to be processed.

As is shown in FIG.9, a color adjusting process 206 is performed on text 202, lines 203, and graphics 204. Further, a color matching process 207, a BG/UCR process 209, a total amount regulating process 211, and a gamma correction process 213, and a text dithering process (halftone process) 215 are performed on text 202. A color matching process 208, a BG/UCR process 210, a total amount regulating process 212, a gamma correction process 214, and a graphics dithering process (halftone process) 216 are performed on lines 203 and graphics 204.

With respect to images 205, a color determination/compression method determination process 211 is performed, after which a color adjustment process 222 and a color matching process 223 are normally performed, followed by a BG/UCR process 224, a total amount regulating process 225, a gamma correction process 226, and an error diffusion process (halftone process) 227. In a case where the image 205 is determined to have no more than two colors, an image decimation process 231, a color adjustment process 232, a color matching process 233a or an indexless process (process without color matching) 233b are performed, after which the BG/UCR process 224, the total amount regulating process 225, the gamma correction process 226, and the error diffusion process (halftone process) 227 are performed.

It is noted that in the case of processing lines or graphics, an ROP (raster operation) process 241 may be performed before performing the color matching process 206, and when the object is determined to be an image, the color matching process 232 may be performed.

In this way, sets of image data processed according to their object types are recombined into one set of image data to be passed down to the recording apparatus (imaging apparatus side).

It is noted that an image processing method according to an embodiment of the present invention is concerned with processing performed at the BG/UCR processing part for executing black generation and under color removal on a CMY value.

In the following, a black ink incorporation process associated with the image processing method of an embodiment of the present invention that is executed by an image processing apparatus (host 90) through control of a printer driver is described. In the present embodiment, the maximum amount of black ink b to be incorporated is arranged to be within a range of 0-52% (i.e., 0% < b < 52%) in order to prevent a decrease in image glossiness. For example, an UCR (under color removal) process that is commonly used in a black ink incorporation process is represented by the following formula:

$$K = p \times \min(Y, M, C)$$

$$Y' = Y - K$$

$$M' = M - K$$

$$C' = C - K$$

It is noted that in the above formula, 'p' denotes the so-called UCR rate, and is usually set to an arbitrary value within a range of 0-100% (i.e., 0% < p ≦ 100%).

In the present embodiment, the maximum black ink incorporation amount is regulated according.to the graph shown in FIG.10. A grayscale up to a prescribed level may be realized by a solid color black ink, and when the grayscale exceeds the prescribed level, the corresponding grayscale may be realized by a composite color ink corresponding to a mixture of cyan, yellow, and magenta.

In the present embodiment, the C, M, Y subtraction amount (under color removal amount) and the black generation amount correspond, and thereby, the UCR rate is set to 100%. In an alternative embodiment, in order to prevent a reversal of the grayscale due to non-uniformity of the ink amount, the UCR rate may be set to 100% only when the black incorporation amount does not exceed the prescribed amount.

The maximum black ink incorporation amount is set according to an image glossiness measurement and an image sensory evaluation result that may be obtained from four-color reproduction. The black incorporation amount is set so that the glossiness of a black image may not be substantially degraded upon forming an image on a glossy recording medium such as glossy paper, semi-glossy paper, or matte paper used for inkjet recording. In this way the glossiness of black may be prevented from being degraded. Also, the maximum black ink incorporation amount is set such that when an image is recorded on a glossy recording medium, the glossiness of the recorded image may not be substantially lower than that of the recording medium. In this way, the glossiness of a recorded image may be prevented from being lower than that of the recording medium.

In the present embodiment, black is realized with a solid color ink until reaching the prescribed maximum black ink incorporation amount. A grayscale requiring black ink exceeding the prescribed maximum black ink incorporation amount may be realized by gradually incorporating a composite of cyan, magenta, and yellow.

In this way, the maximum amount of black ink to be used may be controlled, and color ink with glossiness may be incorporated so that the decrease in glossiness may be prevented and image degradation may be reduced. Also, in comparison with a case of printing black entirely with a three-color composite black of cyan, magenta, and yellow, in the present embodiment, highlighted portions may be realized with the solid color black ink, and thereby the grayscale difference may be reduced as is shown in FIG.11, and a smooth contrast may be realized.

Also, with regard to gray balance, since the solid color black is used in the present embodiment, improved characteristics may be obtained compared to the case of using the composite black as is illustrated in FIG. 12.

FIG.13 is a graph indicating glossiness measurement results upon inputting a patch of R = 0, G = 0, and B = 0 (i.e., black) and changing the maximum black ink incorporation amount (measured using micro-gloss 60° by BYK-Gardner). In comparison to a case where the maximum black ink incorporation amount is set to 100% in which case glossiness is significantly decreased, in the present embodiment, by regulating (reducing) the maximum black ink incorporation amount, a decrease in image glossiness may be prevented.

FIG.14 is a graph indicating results of performing sensory evaluations on image outputs of Test Charts No. 1 and No. 5 distributed by the Society of Electrophotography of Japan that are obtained by having an image input apparatus read the test charts and output the read images with differing maximum black ink incorporation amounts set thereto. It is noted that a large sensory evaluation value represents good image quality and a sensory evaluation value of 2 or above represents an acceptable image quality level. By incorporating black ink, advantageous effects may be realized with respect to consistency of shadow portions and gray balance so that a large sensory evaluation value may be obtained. However, as the black ink incorporation amount is increased, the saturation level of highly saturated portions may be degraded and the difference in glossiness between a highly saturated portion and a shadowed portion may stand out to thereby degrade the image quality.

Accordingly, rather than setting the maximum black ink incorporation amount to 100%, the maximum black ink incorporation amount b is preferably set to be 0% < b < 52% according to an embodiment of the present invention. As is shown in FIG. 14, when the maximum black ink incorporation amount is set to 52%, the sensory evaluation value falls below two, the minimum acceptable image quality level, and therefore, the maximum black ink incorporation amount is preferably arranged to be lower than 52%.

In particular, based on the sensory evaluation results of FIG. 14 as well as measurements of differences in glossiness between the recording medium (paper) and the reproduced image as is shown in FIG. 15 (measured by micro- gloss 60° by BYK- Gardner), the maximum black ink incorporation amount is preferably set around 30% so that the acceptable value of the glossiness of a reproduced image may substantially correspond to that of the recording medium (paper) .

According to an aspect of the present invention, even when an imaging apparatus uses pigment ink, glossiness of a reproduced image may not be lost upon printing black on special paper such as glossy paper, semi-glossy paper, or matte paper and a desirable image quality may be obtained.

Although the present invention is shown and described with respect to certain preferred embodiments, it is obvious that equivalents and modifications will occur to others skilled in the art upon reading and understanding the specification. The present invention includes all such equivalents and modifications, and is limited only by the scope of the claims. For example, it is noted that according to the above-described embodiments of the present invention, the printer driver is implemented in an image processing apparatus such as a computer and is configured to control the computer to execute the image processes described above. However, alternative embodiments are possible in which the imaging apparatus includes a processing unit for executing the image processes described above, for example.

**Claims**

1. An image processing method for performing an under color removal process and a black recording liquid incorporation process with respect to an input three-color signal, and generating image data for an inkjet recording apparatus that is configured to form a color image on a glossy recording medium using at least a cyan recording liquid, a magenta recording liquid, a yellow recording liquid, and a black recording liquid, the method comprising the steps of:

    setting a maximum black recording liquid incorporation amount (132) according to recorded image glossiness characteristics of the glossy recording medium and such that the maximum black recording liquid incorporation amount is required by a prescribed greyscale level that is greater than 0% and less than 52%; and
    setting black color in the color image using an under color removal process, wherein:

        for required greyscale levels not exceeding the prescribed greyscale level, the black color in the color image is regulated by using a predetermined under color removal rate, and
        for required greyscale levels exceeding the prescribed greyscale level such that the amount of black recording liquid regulated by using the predetermined under color removal rate would exceed the set maximum black recording liquid incorporation amount, the black color in the color image is set to be realized by a combination of the black recording liquid and a composite black formed of the cyan recording liquid, the magenta recording liquid, and the yellow recording liquid, wherein the amount of black recording liquid is limited to the set maximum black recording liquid incorporation amount and the required greyscale level is realized by addition of the composite black.

2. The image processing method as claimed in claim 1, wherein
the cyan recording liquid, the magenta recording liquid, the yellow recording liquid, and the black recording liquid contain pigment.

3. The image processing method as claimed in either claim 1 or claim 2, wherein
the maximum black recording liquid incorporation amount is set such that the glossiness of the black color realized in the color image formed on the glossy recording medium does not become substantially lower than glossiness of the glossy recording medium.

**4.** The image processing method as claimed in either claim 1 or claim 2, wherein the predetermined under color removal rate for the under color removal process is set to 100%.

**5.** The image processing method as claimed in either claim 1 or claim 2, wherein the under color removal rate for the under color removal process is set to 100% when the under color removal amount is below the set maximum black recording liquid incorporation amount.

**6.** A printer driver run on a computer that is configured to perform the image processing method of claim 1.

**7.** An inkjet recording apparatus that is configured to perform an under color removal process and a black recording liquid incorporation process with respect to an input three-color signal, and form a color image on a glossy recording medium using at least a cyan recording liquid, a magenta recording liquid, a yellow recording liquid, and a black recording liquid, the apparatus comprising:

a processing unit (211, 212, 225) that is configured:

to set a maximum black recording liquid incorporation amount according to recorded image glossiness characteristics of the glossy recording medium and such that the maximum black recording liquid incorporation amount is required by a prescribed greyscale level that is greater than 0% and less than 52%; and
to set black color in the color image using an under color removal process, wherein:

for required greyscale levels not exceeding the prescribed greyscale level, the black color in the color image is regulated by using a predetermined under color removal rate, and
for required greyscale levels exceeding the prescribed greyscale level such that the amount of black recording liquid regulated by using the predetermined under color removal rate would exceed the set maximum black recording liquid incorporation amount, the black color in the color image is set to be realized by a combination of the black recording liquid and a composite black formed of the cyan recording liquid, the magenta recording liquid, and the yellow recording liquid, wherein the amount of black recording liquid is limited to the set maximum black recording liquid incorporation amount and the required greyscale level is realized by addition of the composite black.

**8.** The apparatus as claimed in claim 7, wherein the cyan recording liquid, the magenta recording liquid, the yellow recording liquid, and the black recording liquid contain pigment.

**9.** The apparatus as claimed in either claim 7 or claim 8, wherein
the maximum black recording liquid incorporation amount is set such that the glossiness of the black color realized in the color image formed on the glossy recording medium does not become substantially lower than glossiness of the glossy recording medium.

**10.** The apparatus as claimed in either claim 7 or claim 8, wherein
the predetermined under color removal rate for the under color removal process is set to 100%.

**11.** The apparatus as claimed in either claim 7 or claim 8, wherein
the under color removal rate for the under color removal process is set to 100% when the under color removal amount is below the set maximum black recording liquid incorporation amount.

**12.** An image processing apparatus that is configured to generate image data for an inkjet recording apparatus that forms a color image on a recording medium using at least a cyan recording liquid, a magenta recording liquid, a yellow recording liquid, and a black recording liquid, the image processing apparatus comprising a printer driver according to claim 6.

**Patentansprüche**

**1.** Bildverarbeitungsverfahren zum Ausführen eines Unterfarbenreduktionsverfahrens und eines Verfahrens zum Einfügen der schwarzen Aufzeichnungsflüssigkeit in Bezug auf ein Drei-Farben-Eingangssignal und Erzeugen von Bilddaten für eine Tintenstrahlaufzeichnungsvorrichtung, die konfiguriert ist, ein Farbbild auf einem glänzenden Aufzeichnungsmedium unter Verwendung mindestens einer cyanblauen Aufzeichnungsflüssigkeit, einer magentaroten Aufzeichnungsflüssigkeit, einer gelben Aufzeichnungsflüssigkeit und einer schwarzen Aufzeichnungsflüssigkeit zu bilden, wobei das Verfahren die Schritte umfasst:

Einstellen einer maximalen Einfügungsmenge der schwarzen Aufzeichnungsflüssigkeit (132) gemäß der Glanzeigenschaften für das aufgezeichnete Bild des glänzenden Aufzeichnungsmediums und derart, dass die maximale Einfügungsmenge der schwarzen Aufzeichnungsflüssigkeit durch einen vorgeschriebenen Graustufenpegel, der größer als 0 % ist und weniger als 52 % beträgt, benötigt wird; und
Einstellen der schwarzen Farbe in dem Farbbild unter Verwendung eines Unterfarbenreduktionsverfahrens, wobei:

die schwarze Farbe in dem Farbbild für benötigte Graustufenpegel, die den vorgeschriebenen Graustufenpegel nicht überschreiten, unter Verwendung einer vorgegebenen Unterfarbenreduktionsrate reguliert wird, und
die schwarze Farbe in dem Farbbild für benötigte Graustufenpegel, die den vorgeschriebenen Graustufenpegel überschreiten, so dass die Menge der schwarzen Aufzeichnungsflüssigkeit, die unter Verwendung der vorgegebenen Unterfarbenreduktionsrate reguliert wird, die eingestellte maximale Einfügungsmenge der schwarzen Aufzeichnungsflüssigkeit überschreiten würde, eingestellt wird, um durch eine Kombination der schwarzen Aufzeichnungsflüssigkeit und eines zusammengesetzten Schwarz, das aus der cyanblauen Aufzeichnungsflüssigkeit, der magentaroten Aufzeichnungsflüssigkeit und der gelben Aufzeichnungsflüssigkeit gebildet wird, realisiert zu werden, wobei die Menge der schwarzen Aufzeichnungsflüssigkeit auf die eingestellte maximale Einfügungsmenge der schwarzen Aufzeichnungsflüssigkeit beschränkt ist und der benötigte Graustufenpegel durch Hinzufügen des zusammengesetzten Schwarz realisiert wird.

**2.** Bildverarbeitungsverfahren nach Anspruch 1, wobei die cyanblaue Aufzeichnungsflüssigkeit, die magentarote Aufzeichnungsflüssigkeit, die gelbe Aufzeichnungsflüssigkeit und die schwarze Aufzeichnungsflüssigkeit Pigment enthalten.

**3.** Bildverarbeitungsverfahren entweder nach Anspruch 1 oder Anspruch 2, wobei
die maximale Einfügungsmenge der schwarzen Aufzeichnungsflüssigkeit so eingestellt wird, dass der Glanz der in dem auf dem glänzenden Aufzeichnungsmedium gebildeten Farbbild realisierten schwarzen Farbe im Wesentlichen nicht geringer als der Glanz des glänzenden Aufzeichnungsmediums wird.

**4.** Bildverarbeitungsverfahren entweder nach Anspruch 1 oder Anspruch 2, wobei
die vorgegebene Unterfarbenreduktionsrate für das Unterfarbenreduktionsverfahren auf 100 % eingestellt wird.

**5.** Bildverarbeitungsverfahren entweder nach Anspruch 1 oder Anspruch 2, wobei
die Unterfarbenreduktionsrate für das Unterfarbenreduktionsverfahren auf 100 % eingestellt wird, wenn die Unterfarbenreduktionsmenge unter der eingestellten maximalen Einfügungsmenge der schwarzen Aufzeichnungsflüssigkeit liegt.

**6.** Druckertreiber, der auf einem Computer läuft, der konfiguriert ist, das Bildverarbeitungsverfahren nach Anspruch 1 auszuführen.

**7.** Tintenstrahlaufzeichnungsvorrichtung, die konfiguriert ist, ein Unterfarbenreduktionsverfahren und ein Verfahren für das Einfügen der schwarzen Aufzeichnungsflüssigkeit in Bezug auf ein Drei-Farben-Eingangssignal auszuführen und ein Farbbild auf einem glänzenden Aufzeichnungsmedium unter Verwendung mindestens einer cyanblauen Aufzeichnungsflüssigkeit, einer magentaroten Aufzeichnungsflüssigkeit, einer gelben Aufzeichnungsflüssigkeit und einer schwarzen Aufzeichnungsflüssigkeit zu bilden, wobei die Vorrichtung umfasst:

eine Verarbeitungseinheit (211, 212, 225), die konfiguriert ist:

eine maximale Einfügungsmenge der schwarzen Aufzeichnungsflüssigkeit gemäß den Glanzeigenschaften für das aufgezeichnete Bild des glänzenden Aufzeichnungsmediums und derart einzustellen, dass die maximale Einfügungsmenge der schwarzen Aufzeichnungsflüssigkeit durch einen vorgeschriebenen Graustufenpegel, der größer als 0 % ist und weniger als 52 % beträgt, benötigt wird; und
die schwarze Farbe in dem Farbbild unter Verwendung eines Unterfarbenreduktionsverfahrens einzustellen, wobei:

die schwarze Farbe in dem Farbbild für benötigte Graustufenpegel, die den vorgeschriebenen Graustufenpegel nicht überschreiten, durch Verwendung einer vorgegebenen Unterfarbenreduktionsrate reguliert wird, und
die schwarze Farbe in dem Farbbild für benötigte Graustufenpegel, die den vorgeschriebenen Graustufenpegel überschreiten, so dass die Menge der schwarzen Aufzeichnungsflüssigkeit, die unter Verwendung der Unterfarbenreduktionsrate reguliert wird, die eingestellte maximale Einfügungsmenge der schwarzen Aufzeichnungsflüssigkeit überschreiten würde, eingestellt wird, um durch eine Kombination der schwarzen Aufzeichnungsflüssigkeit und eines zusammengesetzten Schwarz, das aus der cyanblauen Aufzeichnungsflüssigkeit, der magentaroten Aufzeichnungsflüssigkeit und der gelben Aufzeichnungsflüssigkeit gebildet wird, realisiert zu werden, wobei die Menge der schwarzen Aufzeichnungsflüssigkeit auf die eingestellte maximale Einfügungsmenge der schwarzen Aufzeichnungsflüssigkeit beschränkt ist und der benötigte Graustufenpegel durch Hinzufügen des zusammengesetzten Schwarz realisiert wird.

**8.** Vorrichtung nach Anspruch 7, wobei die cyanblaue Aufzeichnungsflüssigkeit, die magentarote Aufzeichnungsflüssigkeit, die gelbe Aufzeichnungsflüssigkeit und die schwarze Aufzeichnungsflüssigkeit Pigment enthalten.

**9.** Vorrichtung entweder nach Anspruch 7 oder Anspruch 8, wobei
die maximale Einfügungsmenge der schwarzen Aufzeichnungsflüssigkeit so eingestellt wird, dass der Glanz der in dem auf dem glänzenden Aufzeichnungsmedium gebildeten Farbbild realisierten schwarzen Farbe im Wesentlichen nicht geringer als der Glanz des glänzenden Aufzeichnungsmediums wird.

**10.** Vorrichtung entweder nach Anspruch 7 oder Anspruch 8, wobei
die vorgegebene Unterfarbenreduktionsrate für das Unterfarbenreduktionsverfahren auf 100 % eingestellt ist.

**11.** Vorrichtung entweder nach Anspruch 7 oder Anspruch 8, wobei
die Unterfarbenreduktionsrate für das Unterfarbenreduktionsverfahren auf 100 % eingestellt ist, wenn die Unterfarbenreduktionmenge unter der eingestellten maximalen Einfügungsmenge der schwarzen Aufzeichnungsflüssigkeit liegt.

**12.** Bildverarbeitungsvorrichtung, die konfiguriert ist, Bilddaten für eine Tintenstrahlaufzeichnungsvorrichtung zu erzeugen, die ein Farbbild auf einem Aufzeichnungsmedium unter Verwendung mindestens einer cyanblauen Aufzeichnungsflüssigkeit, einer magentaroten Aufzeichnungsflüssigkeit, einer gelben Aufzeichnungsflüssigkeit und einer schwarzen Aufzeichnungsflüssigkeit bildet, wobei die Bildverarbeitungsvorrichtung einen Druckertreiber nach Anspruch 6 umfasst.

## Revendications

**1.** Procédé de traitement d'image pour réaliser un processus de retrait des sous-couleurs et un processus d'incorporation de liquide d'enregistrement noir par rapport à un signal tricolore d'entrée, et générer des données d'image pour un appareil d'enregistrement à jet d'encre qui est configuré pour former une image en couleur sur un support d'enregistrement brillant en utilisant au moins un liquide d'enregistrement cyan, un liquide d'enregistrement magenta, un liquide d'enregistrement jaune et un liquide d'enregistrement noir, le procédé comprenant les étapes consistant à :

déterminer une quantité d'incorporation de liquide d'enregistrement noir maximum (132) selon les caractéristiques de brillance d'image enregistrée du support d'enregistrement brillant et de sorte que la quantité d'incorporation de liquide d'enregistrement noir maximum est imposée par un niveau d'échelle des gris qui est supérieur à 0 % et inférieur à 52 % ; et
placer la couleur noire dans l'image de couleur en utilisant un processus de retrait des sous-couleurs, dans lequel :

pour des niveaux d'échelle des gris requis ne dépassant pas le niveau d'échelle des gris prédéterminé, la couleur noire dans l'image de couleur est régulée en utilisant un taux de retrait des sous-couleurs prédéterminé, et
pour des niveaux d'échelle des gris requis dépassant le niveau d'échelle des gris prédéterminé de sorte que la quantité de liquide d'enregistrement noir régulée en utilisant le taux de retrait des sous-couleurs prédéterminé dépasse la quantité d'incorporation de liquide d'enregistrement noir maximum de consigne, la couleur noire dans l'image de couleur est déterminée pour être réalisée en combinant du liquide d'enregistrement noir et un noir composite formé avec le liquide d'enregistrement cyan, le liquide d'enregistrement magenta et le liquide d'enregistrement jaune, dans lequel la quantité de liquide d'enregistrement noir est limitée à la quantité d'incorporation de liquide d'enregistrement noir maximum de consigne et le niveau d'échelle des gris requis est réalisé en ajoutant le noir composite.

2. Procédé de traitement d'image selon la revendication 1, dans lequel
le liquide d'enregistrement cyan, le liquide d'enregistrement magenta, le liquide d'enregistrement jaune et le liquide d'enregistrement noir contiennent des pigments.

3. Procédé de traitement d'image selon la revendication 1 ou la revendication 2, dans lequel
la quantité d'incorporation de liquide d'enregistrement noir maximum est déterminée de sorte que la brillance de la couleur noire réalisée dans l'image de couleur formée sur le support d'enregistrement brillant n'est sensiblement pas inférieure à la brillance du support d'enregistrement brillant.

4. Procédé de traitement d'image selon la revendication 1 ou la revendication 2, dans lequel
le taux de retrait des sous-couleurs prédéterminé pour le processus de retrait des sous-couleurs est de 100 %.

5. Procédé de traitement d'image selon la revendication 1 ou la revendication 2, dans lequel
le taux de retrait des sous-couleurs pour le processus de retrait des sous-couleurs est de 100 % lorsque la quantité de retrait des sous-couleurs est inférieure à la quantité d'incorporation de liquide d'enregistrement noir maximum de consigne.

6. Pilote d'imprimante fonctionnant sur un ordinateur qui est configuré pour réaliser un procédé de traitement d'image selon la revendication 1.

7. Appareil d'enregistrement à jet d'encre qui est configuré pour réaliser un processus de retrait des sous-couleurs et un processus d'incorporation de liquide d'enregistrement noir par rapport à un signal tricolore d'entrée et former une image de couleur sur un support d'enregistrement brillant en utilisant au moins un liquide d'enregistrement cyan, un liquide d'enregistrement magenta, un liquide d'enregistrement jaune et un liquide d'enregistrement noir, l'appareil comprenant :

une unité de traitement (211, 212, 225) qui est configurée :

pour déterminer une quantité d'incorporation de liquide d'enregistrement noir maximum selon des caractéristiques de brillance d'image enregistrée du support d'enregistrement brillant et de sorte que la quantité d'incorporation de liquide d'enregistrement noir maximum est imposée par un niveau d'échelle des gris prédéterminé qui est supérieur à 0 % et inférieur à 52 % ; et
pour placer la couleur noire sur l'image de couleur en utilisant un processus de retrait des sous-couleurs, dans lequel :

pour des niveaux d'échelle des gris requis ne dépassant pas le niveau d'échelle des gris prédéterminé, la couleur noire dans l'image de couleur est régulée en utilisant un taux de retrait des sous-couleurs prédéterminé, et
pour des niveaux d'échelle des gris requis dépassant le niveau d'échelle des gris prédéterminé de sorte que la quantité de liquide d'enregistrement noir régulée en utilisant le taux de retrait des sous-couleurs prédéterminé dépasse la quantité d'incorporation de liquide d'enregistrement noir maximum de consigne, la couleur noire dans l'image de couleur est déterminée pour être réalisée en combinant du liquide d'enregistrement noir et un noir composite formé avec le liquide d'enregistrement cyan, le liquide d'enregistrement magenta et le liquide d'enregistrement jaune, dans lequel la quantité de liquide d'enregistrement noir est limitée à la quantité d'incorporation de liquide d'enregistrement noir maximum de consigne et le niveau d'échelle des gris requis est réalisé en ajoutant le noir composite.

8. Appareil selon la revendication 7, dans lequel le liquide d'enregistrement cyan, le liquide d'enregistrement magenta, le liquide d'enregistrement jaune et le liquide d'enregistrement noir contiennent des pigments.

9. Appareil selon la revendication 7 ou la revendication 8, dans lequel
la quantité d'incorporation de liquide d'enregistrement noir maximum est déterminée de sorte que la brillance de la couleur noire réalisée dans l'image de couleur formée sur le support d'enregistrement brillant n'est sensiblement pas inférieure à la brillance du support d'enregistrement brillant.

10. Appareil selon la revendication 7 ou la revendication 8, dans lequel
le taux de retrait des sous-couleurs prédéterminé pour le processus de retrait des sous-couleurs est de 100 %.

11. Appareil selon la revendication 7 ou la revendication 8, dans lequel
le taux de retrait des sous-couleurs pour le processus de retrait des sous-couleurs est de 100 % lorsque la quantité de retrait des sous-couleurs est inférieure à la quantité d'incorporation de liquide d'enregistrement noir maximum de consigne.

**12.** Appareil de traitement d'image qui est configuré pour générer des données d'image pour un appareil d'enregistrement à jet d'encre qui forme une image de couleur sur un support d'enregistrement en utilisant au moins un liquide d'enregistrement cyan, un liquide d'enregistrement magenta, un liquide d'enregistrement jaune, et un liquide d'enregistrement noir, l'appareil de traitement d'image comprenant un pilote d'imprimante selon la revendication 6.

FIG.1

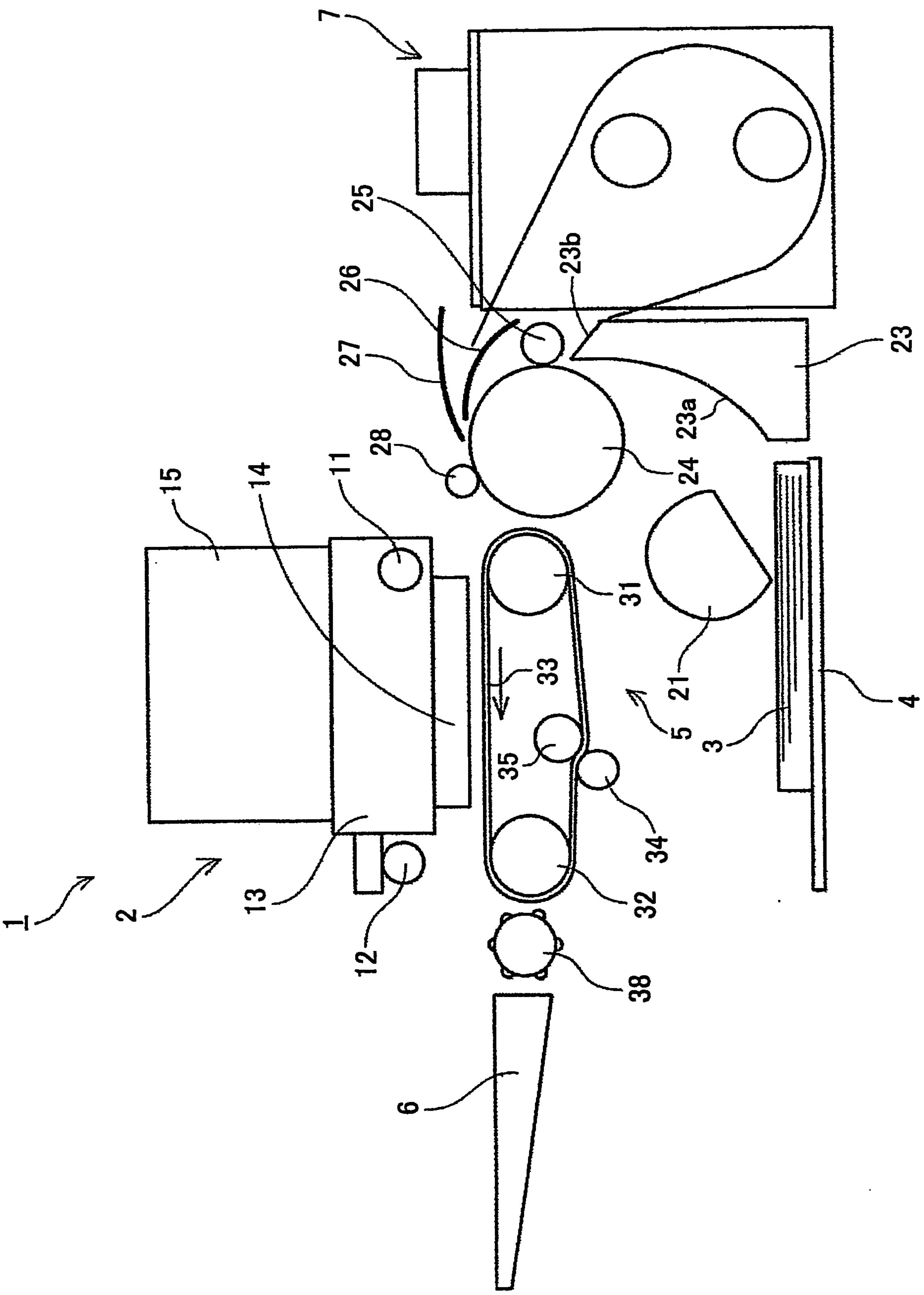

FIG.2

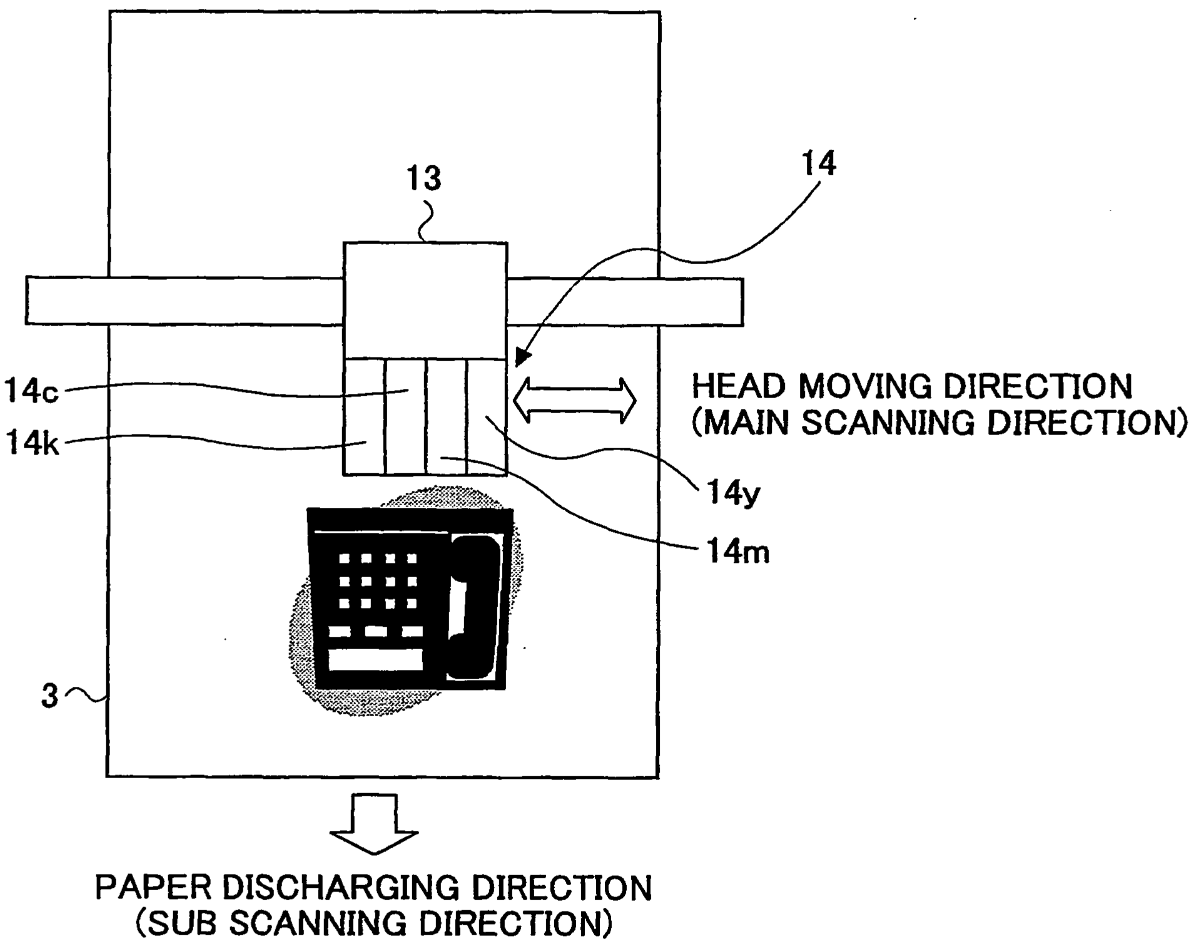
13
14
14c
14k
HEAD MOVING DIRECTION
(MAIN SCANNING DIRECTION)
14y
14m
3
PAPER DISCHARGING DIRECTION
(SUB SCANNING DIRECTION)

FIG.3

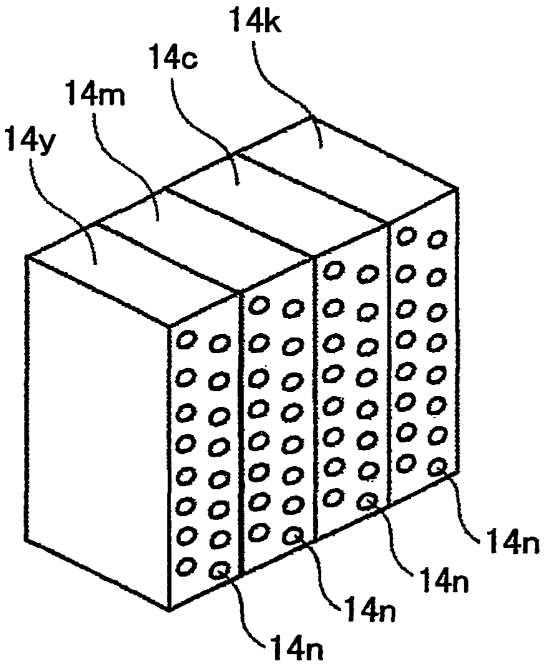


FIG.4

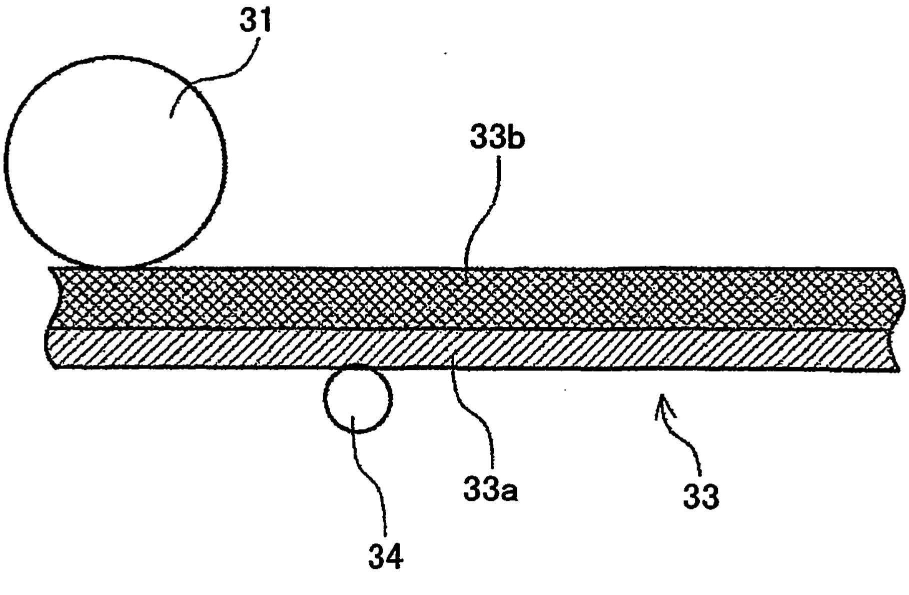

FIG.5A

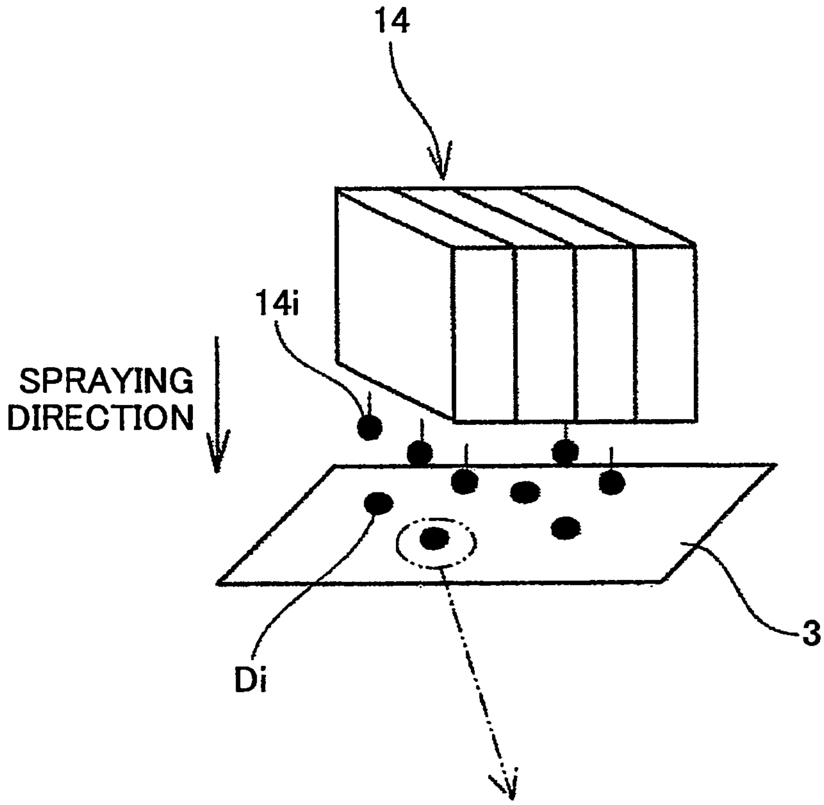


FIG.5B

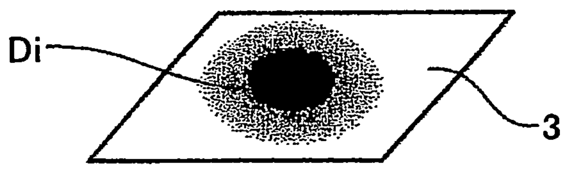

FIG.6

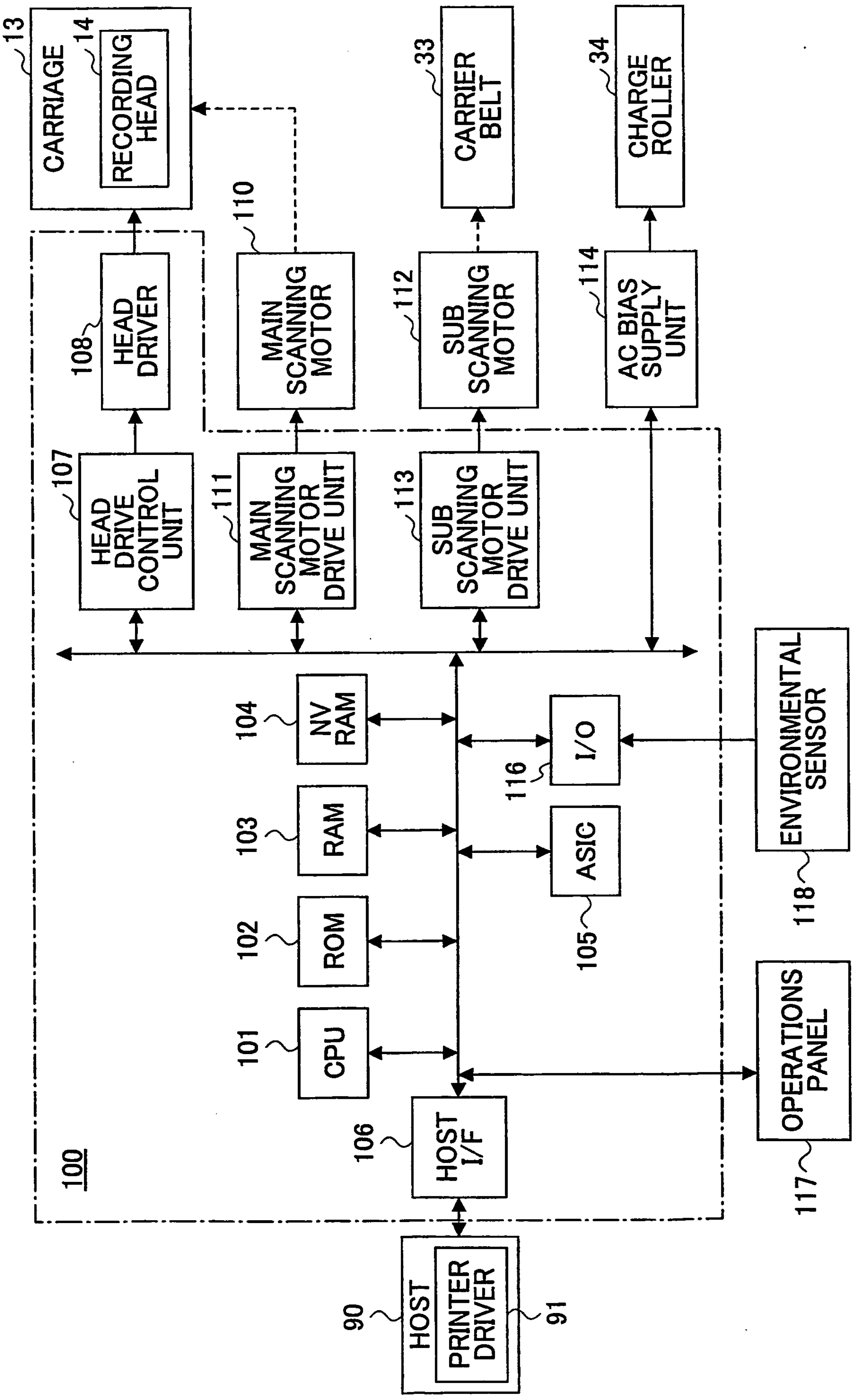
13
CARRIAGE
14
RECORDING HEAD
33
CARRIER BELT
34
CHARGE ROLLER
100
108
HEAD DRIVER
110
MAIN SCANNING MOTOR
112
SUB SCANNING MOTOR
114
AC BIAS SUPPLY UNIT
107
HEAD DRIVE CONTROL UNIT
111
MAIN SCANNING MOTOR DRIVE UNIT
113
SUB SCANNING MOTOR DRIVE UNIT
104
NV RAM
103
RAM
102
ROM
101
CPU
116
I/O
105
ASIC
106
HOST I/F
118
ENVIRONMENTAL SENSOR
117
OPERATIONS PANEL
90
HOST
91
PRINTER DRIVER

FIG.7

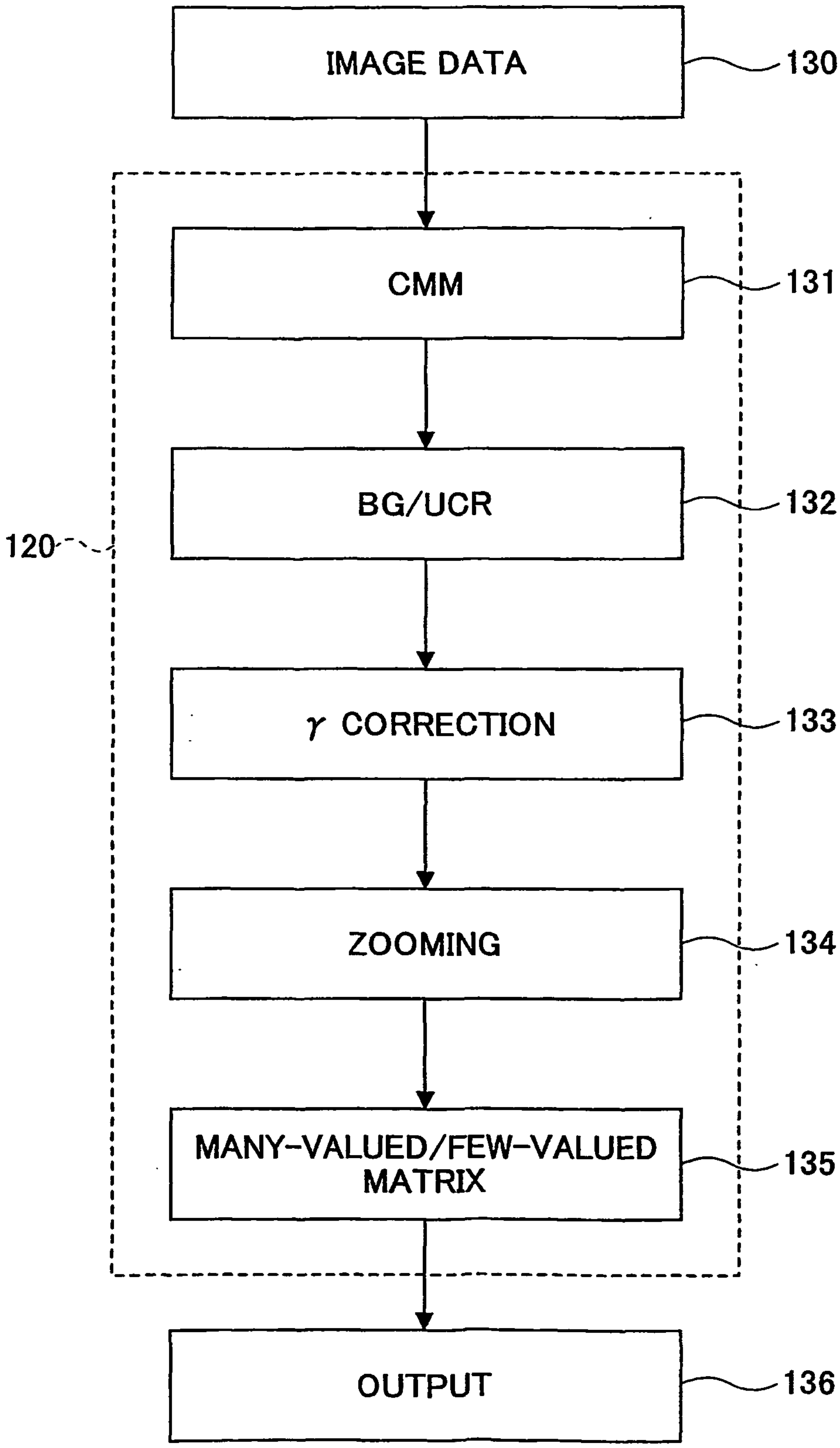
IMAGE DATA
130
CMM
131
BG/UCR
132
120
γ CORRECTION
133
ZOOMING
134
MANY-VALUED/FEW-VALUED MATRIX
135
OUTPUT
136

FIG.8

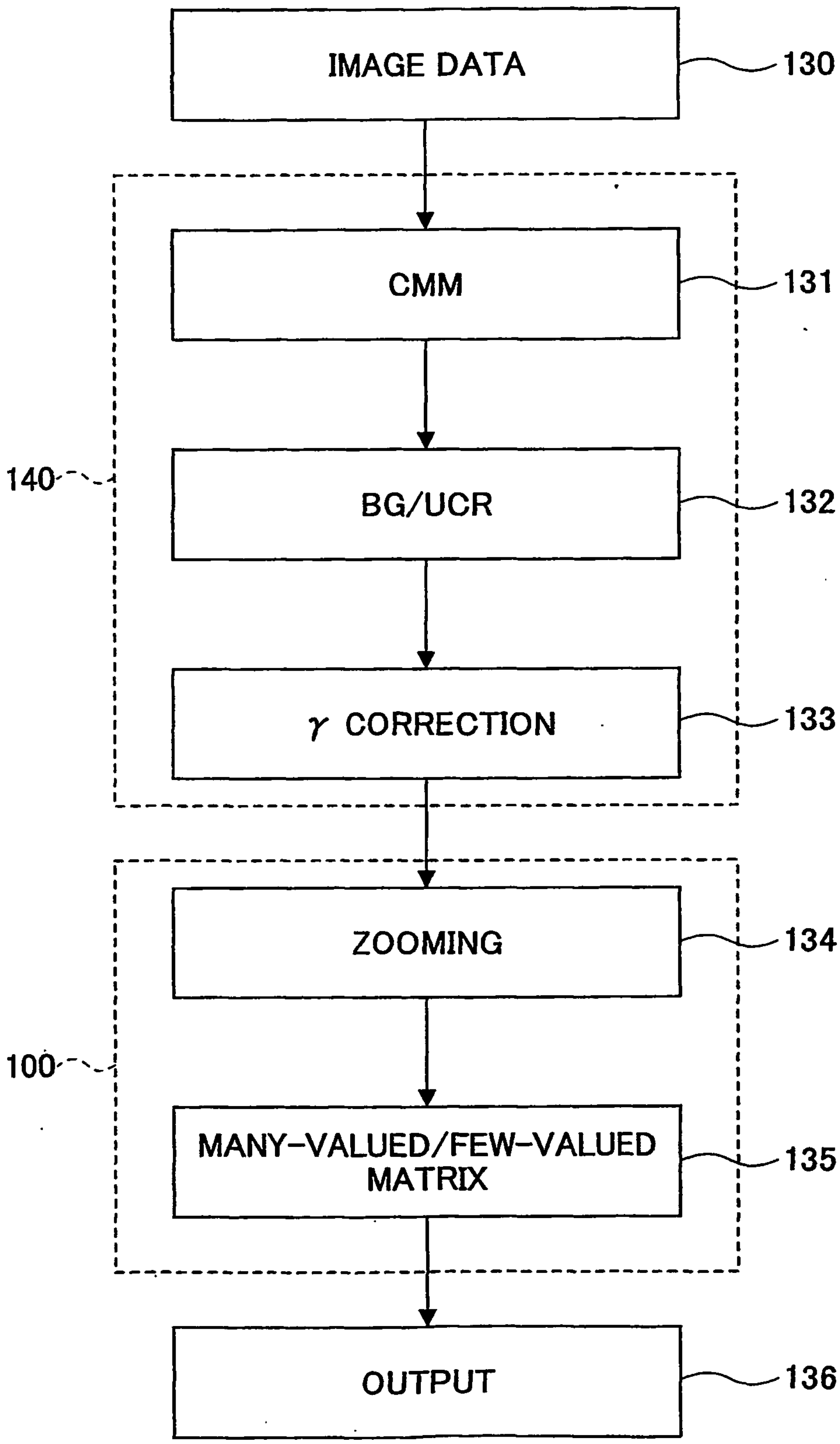
IMAGE DATA
130
CMM
131
BG/UCR
132
γ CORRECTION
133
140
ZOOMING
134
MANY-VALUED/FEW-VALUED MATRIX
135
100
OUTPUT
136

FIG.9

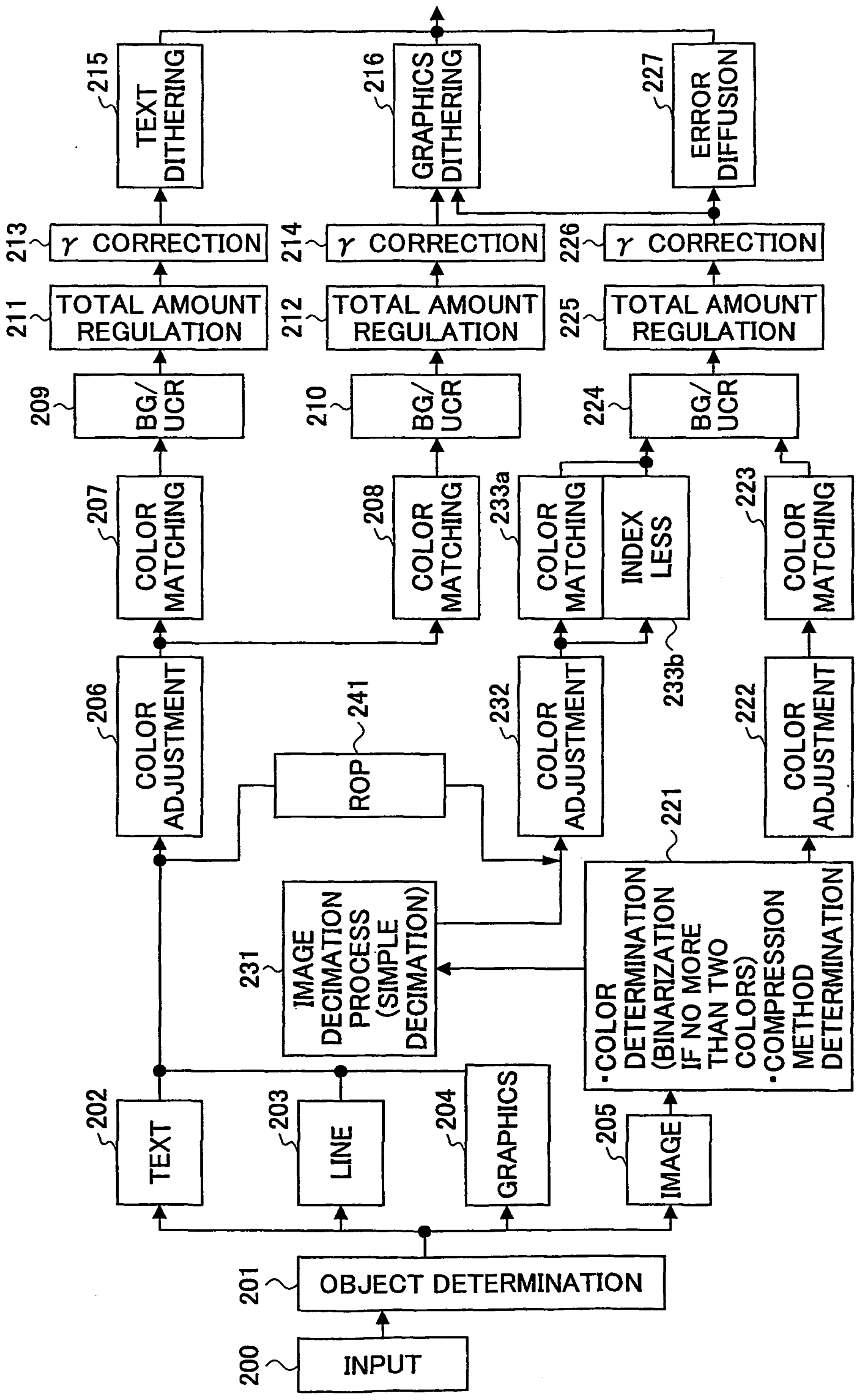
200 INPUT
201 OBJECT DETERMINATION
202 TEXT
203 LINE
204 GRAPHICS
205 IMAGE
221 ·COLOR DETERMINATION (BINARIZATION IF NO MORE THAN TWO COLORS) ·COMPRESSION METHOD DETERMINATION
231 IMAGE DECIMATION PROCESS (SIMPLE DECIMATION)
241 ROP
206 COLOR ADJUSTMENT
232 COLOR ADJUSTMENT
222 COLOR ADJUSTMENT
207 COLOR MATCHING
208 COLOR MATCHING
233a COLOR MATCHING
233b INDEX LESS
223 COLOR MATCHING
209 BG/UCR
210 BG/UCR
224 BG/UCR
211 TOTAL AMOUNT REGULATION
212 TOTAL AMOUNT REGULATION
225 TOTAL AMOUNT REGULATION
213 γ CORRECTION
214 γ CORRECTION
226 γ CORRECTION
215 TEXT DITHERING
216 GRAPHICS DITHERING
227 ERROR DIFFUSION

FIG.10

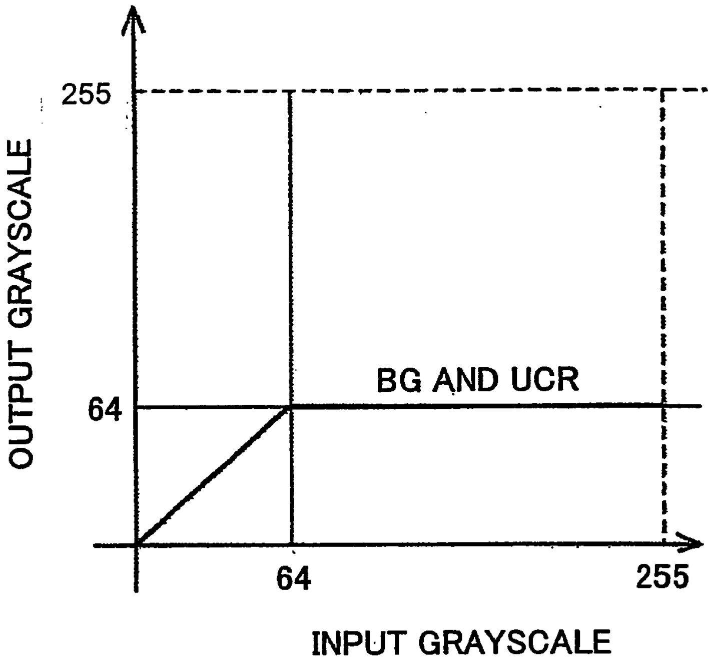
255
OUTPUT GRAYSCALE
64
BG AND UCR
64
255
INPUT GRAYSCALE

FIG.11

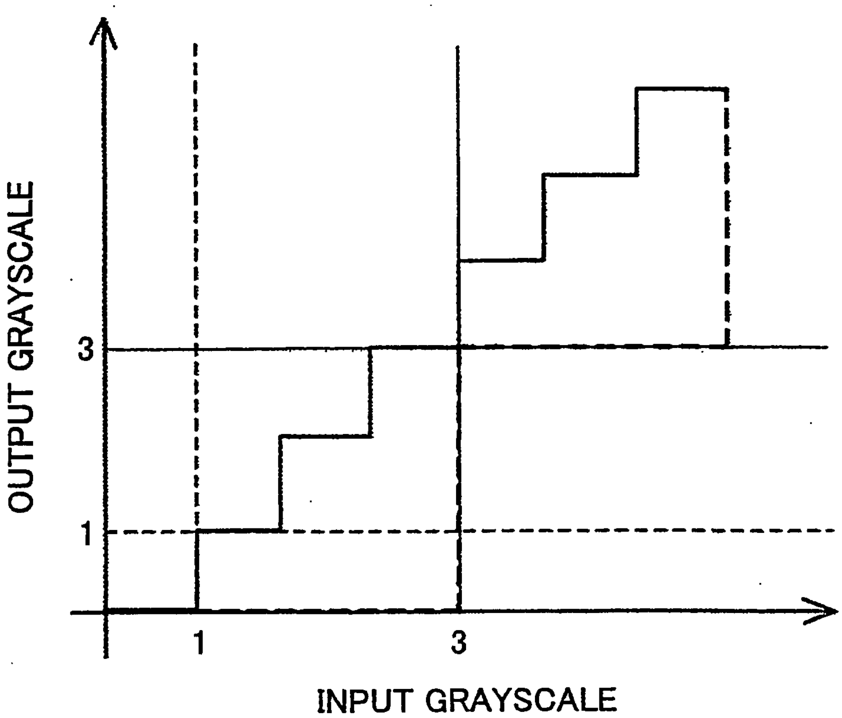
OUTPUT GRAYSCALE
3
1
1
3
INPUT GRAYSCALE

FIG.12

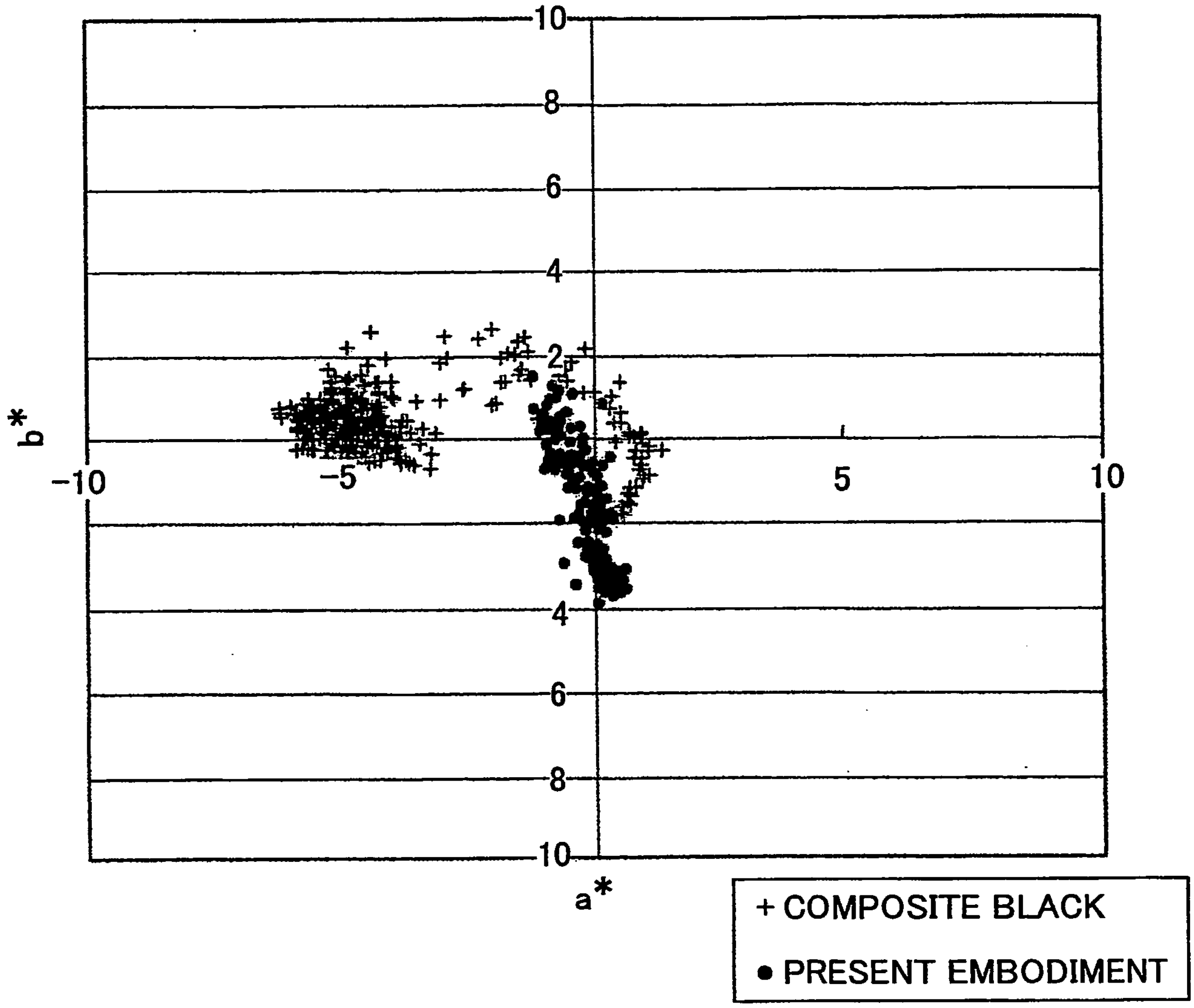
10
8
6
4
2
b*
-10
-5
5
10
4
6
8
10
a*
+ COMPOSITE BLACK
● PRESENT EMBODIMENT

FIG.13

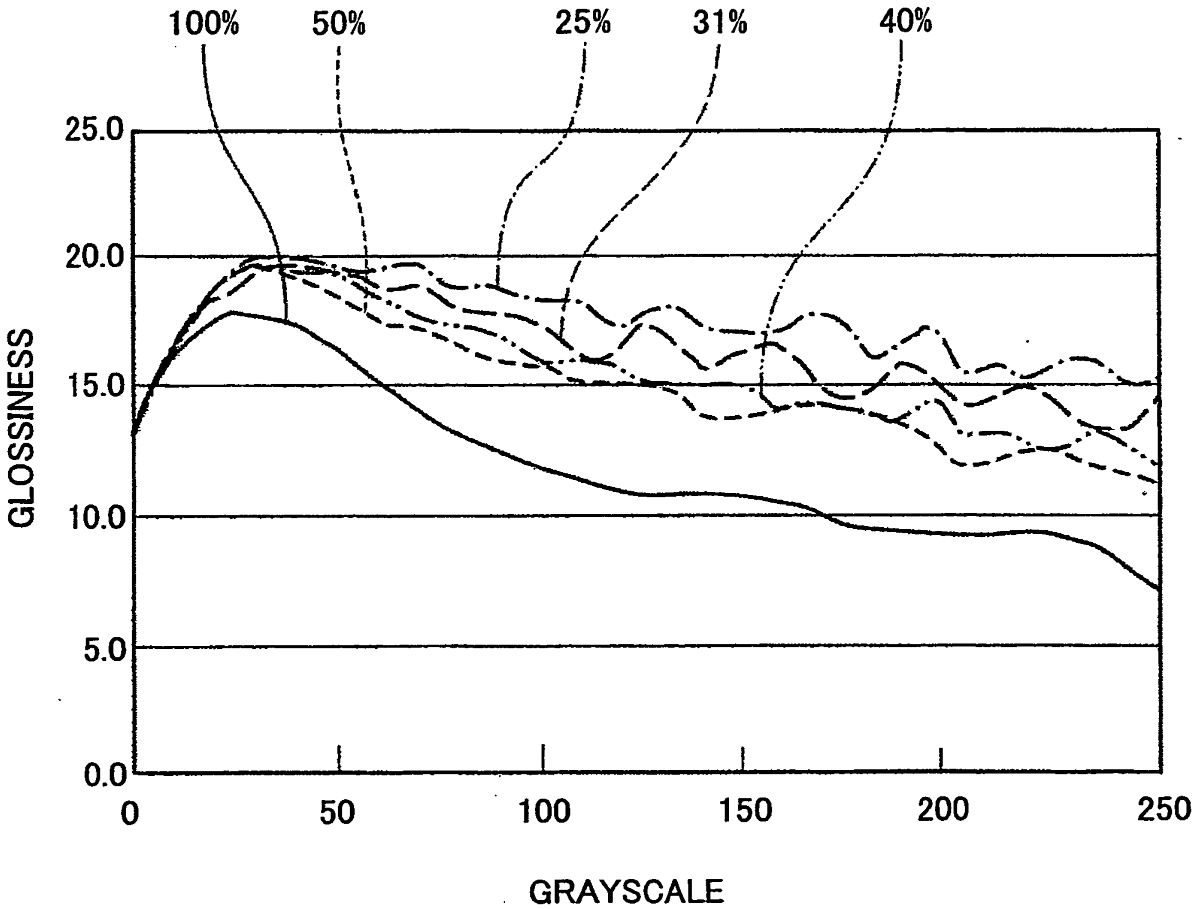
100%
50%
25%
31%
40%
25.0
20.0
15.0
10.0
5.0
0.0
GLOSSINESS
0
50
100
150
200
250
GRAYSCALE

# FIG.14

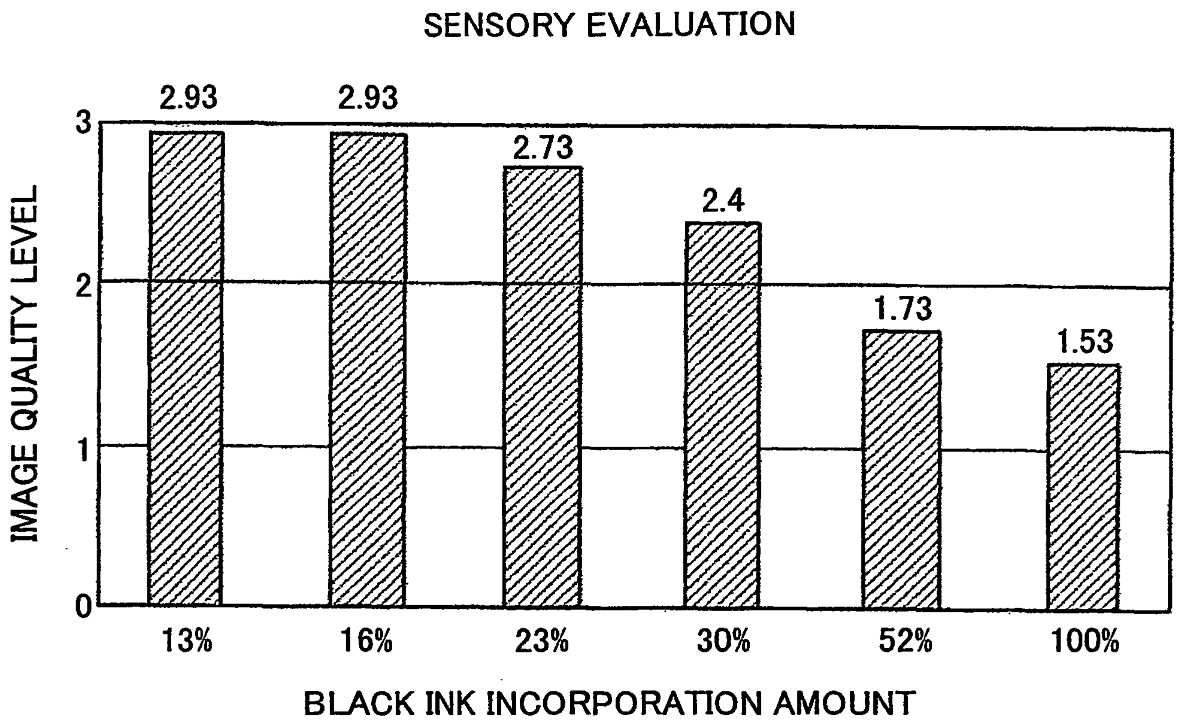


# FIG.15

| MAXIMUM BLACK INCORPORATION AMOUNT | GLOSSINESS DIFFERENCE WITH PAPER |
|---|---|
| 13% | 3.4 |
| 16% | 2.6 |
| 24% | 1.5 |
| 30% | 0.1 |
| 52% | -2.7 |
| 100% | -5.7 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002327138 A
- JP 2004082709 A
- JP 2000225719 A
- US 6765693 B1
- US 5162860 A